# EUROPEAN PATENT APPLICATION

(11) **EP 1 199 692 A2**
(43) Date of publication of application: **24.04.2002**
(21) Application number: 01124299.7
(22) Date of filing: 18.10.2001
(51) Int. Cl.: G07F 19/00, G06F 17/60

(54) **Electronic settlement apparatus, electronic settlement method and computer program**

(30) Priority: 18.10.2000 JP 2000317324
(71) Applicant: WebMoney Corporation, Tokyo 141-0021 (JP)
(72) Inventor: Takatsu, Yuichi, Shinagawa-ku, Tokyo 141-0021 (JP)
(74) Representative: Patentanwälte Rüger, Barthelt & Abel

(57) **Abstract**

A remitter gains access to the transfer page of server (1) to send remitter ID, amount of remittance. The server (1) reduces the balance of electronic money for the remitter by an amount corresponding to the amount of remittance, generates remittee ID to give electronic money corresponding to the amount of remittance to the remittee. However, since the electronic money is invalidated, validation ID for validating the electronic money is sent to the remitter. The remittee sends remittee ID to the server (1) and confirms the reception of electronic money. After that, the remittee sends remittee ID and validation ID to the server (1). The server (1) validates the electronic money by use of the validation ID.

## Description

The present invention relates to an electronic settlement apparatus and an electronic settlement method, and particularly to an electronic settlement apparatus and an electronic settlement method for allowing both parties concerned in settlement to perform transfer of data indicative of a property value.

In recent years, there has grown in use electronic settlement in which settlement of business transaction is conducted by transmitting/receiving data indicative of property values in place of currency. Data indicative of property values can be easily transferred via a network such as the Internet. For this reason, according to the electronic settlement method, settlement using the network may be possible.

However, in the case of buying and selling goods through the electronic settlement, there was difficulty in exchanging data for goods fairly. For example, in the case where the seller hands over goods to the buyer first, the seller cannot always receive transfer of data later without fail and must take a risk of failing in collecting money. While, in the case where transfer of data from the buyer to the seller is carried out prior to the delivery of goods, the buyer must take a risk that goods cannot be obtained. Moreover, even if the seller and buyer carry out the exchange between data and goods on a face-to-face basis, the validity of data cannot be ensured if the seller can successively hold the same data.

The present invention has been made with consideration given to the above problem, and an object of the present invention is to provide an electronic settlement apparatus and an electronic settlement method for allowing both parties concerned in settlement to perform electronic settlement as reducing the risk that they take.

In order to attain the above object, according to the first aspect of the present invention, there is provided an electronic settlement apparatus characterized by comprising memory (1B) for storing first point data representing points given to a first user onto a storage area of the memory (1B) and a processor (1A), wherein the processor (1A) obtains, from an outer section, transferor specification data that specifies the first user, transferee specification data that specifies a second user, and transfer amount data representing points to be transferred to the second user from the first user; updates the first point data stored in the memory (1B) in such a way that the points given to the first user specified by the obtained transferor specification data are reduced by an amount corresponding to the points shown by the obtained transfer amount data; generates second point data representing that the points shown by the obtained transfer amount data are given to the second user and invalidation data representing that the points shown by the transfer amount data are prohibited from being transferred so as to store the corresponding second point data and the corresponding invalidation data onto the storage area of the memory (1B) to be associated with each other; generates validation data to cancel the prohibition of the transfer of points shown by the second point data associated with the invalidation data so as to supply the generated validation data to a supply source of the transferor specification data; and changes or erases the invalidation data when the validation data supplied to the outer section is supplied to the processor (1A), whereby canceling the prohibition of the transfer of points shown by the invalidation data.

According to the above electronic settlement apparatus, the points transferred by the first user are invalidated until validation data is supplied to the processor (1A). For this reason, even if the first user transfers the points before receiving goods, the second user cannot use the points transferred from the first user until the first user notifies the second user of validation data after receiving goods so that the second user can know validation data.

Moreover, even if the points are invalidated, the transfer of points itself is carried out. Thus, if the second user finishes the delivery of goods and receives the notification of validation data from the first user, the second user can collect the points corresponding to the price for goods. Additionally, the transfer of points as such is completed and the points of the respective users are collectively managed. For this reason, there occurs no advantage in which the first user denies the fact that the points are transferred, and double-transfer of points is not carried out.

Accordingly, the electronic settlement apparatus can perform the electronic settlement as reducing the risk that both parties concerned in settlement take.

The processor (1A) generates and outputs inquiry data and stores the corresponding inquiry data onto the storage area of the memory (1B) to be associated with the second point data, the invalidation data, the first user, and the second user; and supplies at lease some of the second point data associated with the corresponding inquiry data, the invalidation data, the data representing the first user and the data representing the second data to the supply source of the corresponding inquiry data when the inquiry data is supplied to the processor (1A).

The use of the above processor (1A) makes it possible to easily grasp the progress of the transfer of points by the party concerned in the transfer.

According to the second aspect of the present invention, there is provided an electronic settlement apparatus characterized by comprising memory (1B) for storing first point data representing points given to a first user onto a storage area of the memory (1B) and a processor (1A), wherein when an instruction to request generation of inquiry data is supplied from an outer section, the processor (1A) generates the inquiry data in response to the corresponding instruction, outputs the generated inquiry data, and stores the corresponding inquiry data onto a storage area of the memory (1B); when authentication data and the inquiry data are supplied from the outer section, the processor (1A) authenticates an output destination of the inquiry data as a second user based on the corresponding authentication data, and when success of authentication is attained, the processor (1A) generates reception confirmation data representing that the corresponding second user has intension to receive the points from the first user so as to store the reception confirmation data onto the storage area of the memory (1B); the processor (1A) obtains, from an outer section, transferor specification data that specifies the first user, the inquiry data, and transfer amount data representing points to be transferred to the second user from the first user; when whether or not the reception confirmation data is stored is determined and it is determined that the reception confirmation data is stored, the processor (1A) updates the first point data stored in the memory (1B) in such a way that the points given to the first user specified by the transferor specification data obtained from the outer section are reduced by an amount corresponding to the points shown by the obtained transfer amount data; when it is determined that the reception confirmation data is stored, the processor (1A) generates second point data representing that the points shown by the transfer amount data obtained from the outer section are given to the second user and invalidation data representing that the points shown by the transfer amount data are prohibited from being transferred so as to store the corresponding second point data and the corresponding invalidation data onto the storage area of the memory (1B) to be associated with the inquiry data; the processor (1A) generates validation data to cancel the prohibition of the transfer of points shown by the second point data associated with the invalidation data so as to supply the generated validation data to a supply source of the transferor specification data; and when the validation data supplied to the outer section is supplied to the processor (1A), the processor (1A) changes or erases the invalidation data, whereby canceling the prohibition of the transfer of points shown by the invalidation data.

In even this electronic settlement apparatus, the points transferred by the first user are invalidated until validation data is supplied to the processor (1A). Moreover, even if the points are invalidated, the transfer of points as such is completed and the points of the respective users are collectively managed.

Accordingly, the electronic settlement apparatus can perform the electronic settlement as reducing the risk that both parties concerned in settlement take.

Moreover, this electronic money using system can easily start the procedure for transferring the points from either side of the transferor and transferee.

According to the third aspect of the present invention, there is provided an electronic settlement apparatus characterized by comprising memory (1B) for storing first point data representing points given to a first user onto a storage area of the memory (1B) and a processor (1A), wherein when transfer amount data representing points, which a second user receives from the first user, and an instruction to request generation of inquiry data are supplied from an outer section, the processor (1A) generates the inquiry data in response to the corresponding instruction, outputs the generated inquiry data, and stores the corresponding inquiry data and the transfer amount data onto a storage area of the memory (1B) to be associated with each other; when authentication data and the inquiry data are supplied from the outer section, the processor (1A) authenticates an output destination of the inquiry data as a second user based on the corresponding authentication data, and when success of authentication is attained, the processor (1A) generates reception confirmation data representing that the corresponding second user has intension to receive the points from the first user so as to store the reception confirmation data onto the storage area of the memory (1B); the processor (1A) obtains transferor specification data that specifies the first user and the inquiry data from an outer section; when whether or not the reception confirmation data is stored is determined and it is determined that the reception confirmation data is stored, the processor (1A) updates the first point data stored in the memory (1B) in such a way that the points given to the first user specified by the transferor specification data obtained from the outer section are reduced by an amount corresponding to the points shown by the transfer amount data associated with the inquiry data obtained from the outer section; when it is determined that the reception confirmation data is stored, the processor (1A) generates second point data representing that the points shown by the transfer amount data obtained from the outer section are given to the second user and invalidation data representing that the points shown by the transfer amount data are prohibited from being transferred so as to store the corresponding second point data and the corresponding invalidation data onto the storage area of the memory (1B) to be associated with the inquiry data; the processor (1A) generates validation data to cancel the prohibition of the transfer of points shown by the second point data associated with the invalidation data so as to supply the generated validation data to a supply source of the transferor specification data; and when the validation data supplied to the outer section is supplied to the processor (1A), the processor (1A) changes or erases the invalidation data, whereby canceling the prohibition of the transfer of points shown by the invalidation data.

In even this electronic settlement apparatus, the points transferred by the first user are invalidated until validation data is supplied to the processor (1A). Moreover, even if the points are invalidated, the transfer of points as such is completed and the points of the respective users are collectively managed.

Accordingly, the electronic settlement apparatus can perform the electronic settlement as reducing the risk that both parties concerned in settlement take.

Moreover, in this electronic money using system, the transfer amount is specified in advance to make it possible to easily start the procedure for transferring the points from either side of the transferor and transferee.

When the inquiry data and cancellation data representing the cancellation of the transfer of points shown by the second point data are supplied to the processor (1A), the processor (1A) changes or erases the invalidation data in response to the cancellation data, and updates the first point data in such a way that the points given to the first user specified by the transferor specification data are increased within the range of the amount corresponding to the points shown by the second point data, whereby canceling the transfer of the corresponding points.

The use of the above processor (1A) makes it possible to easily cancel the transfer of points.

The transferee specification data may represent e-mail address for the second user.

In this case, the processor (1A) may transmit e-mail including transfer notification data representing that the second user receives the transfer of points with respect to the e-mail address shown by the transferee specification data, whereby notifying the second user that there is an offer of the transfer of points.

The memory (1B) may store the second point data to be associated with second identification data that identifies the second user.

In this case, the transfer notification data includes the second identification data, the processor (1A) maintains the prohibition of the transfer of points shown by the second point data associated with the second identification data regardless of whether or not the validation data is supplied to the processor (1A) until the second identification data is supplied to the processor (1A) from the outer section.

According to the above configuration, after confirming that the second user knows that the points are transferred to the second user, the transfer is completed, so that the certainty of settlement can be improved.

When the second identification data and transferee cancellation data representing the cancellation of points shown by the second point data are supplied to the processor (1A), the processor (1A) changes or erases the invalidation data in response to the corresponding transferee cancellation data and updates the first point data in such a way that the points given to the first user specified by the transferor specification data are increased within the range of the amount corresponding to the points shown by the second point data, whereby canceling the transfer of the corresponding points.

The use of the above processor (1A) makes it possible to easily cancel the transfer of points from the transferee.

The processor (1A) generates data representing a web page for confirming that the second user transfers the points, and outputs data representing the corresponding web page to browse the corresponding web page when URL (Uniform Resource Locator) that specifies the corresponding web page is supplied from the outer section, the transfer notification data includes URL that specifies the web page, and the processor (1A) maintains the prohibition of the transfer of points shown by the second point data associated with the second identification data regardless of whether or not the validation data is supplied to the processor (1A) until the data representing the web page is output to the outer section.

According to the above configuration, after confirming that the second user knows that the points are transferred to the second user, the transfer is completed, so that the certainty of settlement can be improved.

According to the fourth aspect of the present invention, there is provided an electronic settlement apparatus characterized by comprising memory (1B) for storing first point data representing points given to a first user onto a storage area of the memory (1B) and a processor (1A), wherein the processor (1A) obtains, from an outer section, transferor specification data that specifies the first user, transferee specification data that specifies a second user, and transfer amount data representing points to be transferred to the second user from the first user; updates the first point data stored in the memory (1B) in such a way that the points given to the first user specified by the obtained transferor specification data are reduced by an amount corresponding to the points shown by the obtained transfer amount data; generates second point data representing that the points shown by the obtained transfer amount data are given to the second user and invalidation data representing that the points shown by the transfer amount data are prohibited from being transferred so as to store the corresponding second point data and the corresponding invalidation data onto the storage area of the memory (1B) to be associated with each other; when authentication data for authenticating the first user and a validation instruction that requests to cancel the prohibition of transfer of points shown by second point data associated with the invalidation data are supplied to the processor (1A), the processor (1A) authenticates the first user based on the corresponding authentication data, and when success of authentication is attained, the processor (1A) changes or erases the invalidation data associated with the second user, who is the partner to whom the corresponding first user transfers points, whereby canceling the prohibition of the transfer of points shown by the invalidation data.

In even this electronic settlement apparatus, the points transferred by the first user are invalidated until validation data is supplied to the processor (1A). Moreover, even if the points are invalidated, the transfer of points as such is completed and the points of the respective users are collectively managed. Accordingly, the electronic settlement apparatus can perform the electronic settlement as reducing the risk that both parties concerned in settlement take. Moreover, this eliminates the need for generating validation data and delivering validation data to make it possible to improve the safety of electronic settlement.

When an inquiry instruction and the authentication data are supplied to the processor (1A), the processor (1A) authenticates the user based on the corresponding authentication data, and when success of authentication is attained, the processor (1A) supplies at least some of the second point data associated with the corresponding authenticated user, the invalidation data and data representing the partner, which is subjected to the transfer of points to/from the corresponding user, to the supply source of the corresponding inquiry data.

The use of the above processor (1A) makes it possible to easily grasp the progress of the transfer of points by the party concerned in the transfer.

When an the authentication data and cancellation data that represents the cancellation of the transfer of points shown by the second point data are supplied to the processor (1A), the processor (1A) authenticates the first user based on the corresponding authentication data, and when success of authentication is attained, the processor (1A) changes or erases the invalidation data associated with the second user, who is the partner to whom the corresponding first user transfers points, and updates the first point data stored in the memory (1B) in such a way that the points given to the first user are increased within the range of the amount corresponding to the points shown by the second point data, whereby canceling the transfer of the corresponding points.

The use of the above processor (1A) makes it possible to easily cancel the transfer of points from the transferor.

When an the authentication data and cancellation data that represents the cancellation of the transfer of points shown by the second point data are supplied to the processor (1A), the processor (1A) authenticates the second user based on the corresponding authentication data, and when success of authentication is attained, the processor (1A) changes or erases the invalidation data associated with the corresponding authenticated second user, and updates the first point data stored in the memory (1B) in such a way that the points given to the first user, who is the partner to whom the corresponding first user transfers points, are increased within the range of the amount corresponding to the points shown by the second point data, whereby canceling the transfer of the corresponding points.

The use of the above processor (1A) makes it possible to easily cancel the transfer of points from the transferee.

According to the fifth aspect of the present invention, there is provided an electronic settlement method characterized by comprising the steps of storing first point data representing points given to a first user; obtaining transferor specification data that specifies the first user, transferee specification data that specifies a second user, and transfer amount data representing points to be transferred to the second user from the first user; updating the first point data stored in the memory (1B) in such a way that the points given to the first user specified by the obtained transferor specification data are reduced by an amount corresponding to the points shown by the obtained transfer amount data; generating second point data representing that the points shown by the obtained transfer amount data are given to the second user and invalidation data representing that the points shown by the transfer amount data are prohibited from being transferred; generating validation data to cancel the prohibition of the transfer of points shown by the second point data associated with the invalidation data so as to supply the generated validation data to a supply source of the transferor specification data; and changing or erasing the invalidation data when the validation data supplied to a outer section is supplied from the outer section, whereby canceling the prohibition of the transfer of points shown by the invalidation data.

According to the above electronic settlement method, the points transferred by the first user are invalidated until validation data is supplied from the outer section. For this reason, even if the first user transfers the points before receiving goods, the second user cannot use the points transferred from the first user until the first user notifies the second user of validation data after receiving goods so that the second user can know validation data.

Moreover, even if the points are invalidated, the transfer of points itself is carried out. Thus, if the second user finishes the delivery of goods and receives the notification of validation data from the first user, the second user can collect the points corresponding to the price for goods. Additionally, the transfer of points as such is completed and the points of the respective users are collectively managed. For this reason, there occurs no advantage in which the first user denies the fact that the points are transferred, and double-transfer of points is not carried out.

Accordingly, the electronic settlement method can perform the electronic settlement as reducing the risk that both parties concerned in settlement take.

According to the sixth aspect of the present invention, there is provided an electronic settlement method characterized by comprising the steps of storing first point data representing points given to a first user; obtaining, from an outer section, transferor specification data that specifies the first user, transferee specification data that specifies a second user, and transfer amount data representing points to be transferred to the second user from the first user; updating the first point data stored in such a way that the points given to the first user specified by the obtained transferor specification data are reduced by an amount corresponding to the points shown by the obtained transfer amount data; generating second point data representing that the points shown by the obtained transfer amount data are given to the second user and invalidation data representing that the points shown by the transfer amount data are prohibited from being transferred so as to store the corresponding second point data and the corresponding invalidation data to be associated with each other; and changing or erasing, when authentication data for authenticating the first user and an validation instruction that requests to cancel the prohibition of the transfer of points shown by the second point data associated with the invalidation data are supplied and the first user is authenticated based on the corresponding authentication data and success of authentication is attained, the invalidation data associated with the second user, who the partner to whom the corresponding authenticated user transfers the points, whereby canceling the prohibition of the transfer of points shown by the corresponding invalidation data.

In even this electronic settlement method, the points transferred by the first user are invalidated until validation data is supplied to the processor (1A). Moreover, even if the points are invalidated, the transfer of points itself is completed and the points of the respective users are collectively managed.

Accordingly, the electronic settlement method can perform the electronic settlement as reducing the risk that both parties concerned in settlement take.

Moreover, this electronic money using system can easily start the procedure for transferring the points from either side of the transferor and transferee.

According to the seventh aspect of the present invention, there is provided an electronic settlement method characterized by comprising the steps of storing first point data representing points given to a first user; generating and outputting, when an instruction to request generation of inquiry data is supplied from an outer section, the inquiry data in response to the corresponding instruction so as to store the corresponding inquiry data; generating and storing, when authentication data and the inquiry data are supplied from the outer section and an output destination of the inquiry data is authenticated as a second user based on the authentication data and success of authentication is attained, reception confirmation data representing that the corresponding second user has intention to receive the points from the first user; obtaining transferor specification data that specifies the first user, the inquiry data, and transfer amount data representing points to be transferred to the second user from the first user from the outer section; updating the first point data stored in such a way that the points given to the first user specified by the transferor specification data obtained from the outer section are reduced by an amount corresponding to the points shown by the obtained transfer amount data when whether or not the reception confirmation data is stored and it is determined that the reception confirmation data is stored; generating second point data representing that the points shown by the transfer amount data obtained from the outer section are given to the second user and invalidation data representing that the points shown by the transfer amount data are prohibited from being transferred when it is determined that the reception confirmation data is stored, so as to store the corresponding second point data and the corresponding invalidation data to be associated with the inquiry data; generating validation data to cancel the prohibition of the transfer of points shown by the second point data associated with the invalidation data so as to supply the generated validation data to a supply source of the transferor specification data; and changing or erasing the invalidation data when the validation data supplied to the outer section is supplied, whereby canceling the prohibition of the transfer of points shown by the invalidation data.

In even this electronic settlement method, the points transferred by the first user are invalidated until validation data is supplied to the processor (1A). Moreover, even if the points are invalidated, the transfer of points as such is completed and the points of the respective users are collectively managed.

Accordingly, the electronic settlement method can perform the electronic settlement as reducing the risk that both parties concerned in settlement take.

Moreover, in this electronic money using system, the transfer amount is specified in advance to make it possible to easily start the procedure for transferring the points from either side of the transferor and transferee.

According to the eighth aspect of the present invention, there is provided an electronic settlement method characterized by comprising the steps of: storing first point data representing points given to a first user; generating and outputting, when transfer amount data representing points, which a second user receives from the first user, and an instruction to request generation of inquiry data are supplied from an outer section, the inquiry data in response to the corresponding instruction so as to store the corresponding inquiry data and the transfer amount data to be associated with each other; generating and storing, when authentication data and the inquiry data are supplied from the outer section and an output destination of the inquiry data is authenticated as a second user based on the authentication data and success of authentication is attained, reception confirmation data representing that the corresponding second user has intention to receive the points from the first user; obtaining transferor specification data that specifies the first user and the inquiry data from the outer section; updating the first point data stored in such a way that the points given to the first user specified by the transferor specification data obtained from the outer section are reduced by an amount corresponding to the points shown by the obtained transfer amount data when whether or not the reception confirmation data is stored and it is determined that the reception confirmation data is stored; generating second point data representing that the points shown by the transfer amount data obtained from the outer section are given to the second user and invalidation data representing that the points shown by the transfer amount data are prohibited from being transferred when it is determined that the reception confirmation data is stored, so as to store the corresponding second point data and the corresponding invalidation data to be associated with the inquiry data; generating validation data to cancel the prohibition of the transfer of points shown by the second point data associated with the invalidation data so as to supply the generated validation data to a supply source of the transferor specification data; and changing or erasing the invalidation data when the validation data supplied to the outer section is supplied, whereby canceling the prohibition of the transfer of points shown by the invalidation data.

In even this electronic settlement method, the points transferred by the first user are invalidated until validation data is supplied to the processor (1A). Moreover, even if the points are invalidated, the transfer of points as such is completed and the points of the respective users are collectively managed. Accordingly, the electronic settlement method can perform the electronic settlement as reducing the risk that both parties concerned in settlement take. Moreover, this eliminates the need for generating validation data and delivering validation data to make it possible to improve the safety of electronic settlement.

According to the ninth aspect of the present invention, there is provided a computer-program causing a computer to function as memory (1B) for storing first point data representing points given to a first user onto a storage area of the memory (1B), and a processor (1A) for: obtaining, from an outer section, transferor specification data that specifies the first user, transferee specification data that specifies a second user, and transfer amount data representing points to be transferred to the second user from the first user; updating the first point data stored in such a way that the points given to the first user specified by the obtained transferor specification data are reduced by an amount corresponding to the points shown by the obtained transfer amount data; generating second point data representing that the points shown by the obtained transfer amount data are given to the second user and invalidation data representing that the points shown by the transfer amount data are prohibited from being transferred so as to store the corresponding second point data and the corresponding invalidation data to be associated with each other; generating validation data for canceling the prohibition of the transfer of points shown by the invalidation data; and changing or erasing the invalidation data when the validation data supplied to the outer section is supplied to the processor (1A), whereby canceling the prohibition of the transfer of points shown by the invalidation data.

According to the computer-program, the points transferred by the first user are invalidated until validation data is supplied to the processor (1A). For this reason, even if the first user transfers the points before receiving goods, the second user cannot use the points transferred from the first user until the first user notifies the second user of validation data after receiving goods so that the second user can know validation data.

Moreover, even if the points are invalidated, the transfer of points itself is carried out. Thus, if the second user finishes the delivery of goods and receives the notification of validation data from the first user, the second user can collect the points corresponding to the price for goods. Additionally, the transfer of points as such is completed and the points of the respective users are collectively managed. For this reason, there occurs no advantage in which the first user denies the fact that the points are transferred, and double-transfer of points is not carried out.

Therefore, according to the computer-program, the electronic settlement can be carried out as reducing the risk that both parties concerned in settlement take.

According to the tenth aspect of the present invention, there is provided a computer-program causing a computer to function as memory (1B) for storing first point data representing points given to a first user onto a storage area of the memory (1B), and a processor (1A) for generating and outputting, when an instruction to request generation of inquiry data is supplied from an outer section, the inquiry data in response to the corresponding instruction so as to store the corresponding inquiry data onto the storage area of the memory (1B); generating, when authentication data and the inquiry data are supplied from the outer section and an output destination of the inquiry data is authenticated as a second user based on the authentication data and success of authentication is attained, reception confirmation data representing that the corresponding second user has intention to receive the points from the first user so as to store the generated reception confirmation data onto the storage area of the memory (1B); obtaining transferor specification data that specifies the first user, the inquiry data, and transfer amount data representing points to be transferred to the second user from the first user from the outer section; updating the first point data stored by the memory (1B) in such a way that the points given to the first user specified by the transferor specification data obtained from the outer section are reduced by an amount corresponding to the points shown by the obtained transfer amount data when whether or not the reception confirmation data is stored and it is determined that the reception confirmation data is stored; generating second point data representing that the points shown by the transfer amount data obtained from the outer section are given to the second user and invalidation data representing that the points shown by the transfer amount data are prohibited from being transferred when it is determined that the reception confirmation data is stored, so as to store the corresponding second point data and the corresponding invalidation data onto the storage area of the memory (1B) to be associated with the inquiry data; generating validation data to cancel the prohibition of the transfer of points shown by the second point data associated with the invalidation data so as to supply the generated validation data to a supply source of the transferor specification data; and changing or erasing the invalidation data when the validation data supplied to the outer section is supplied to the processor (1A), whereby canceling the prohibition of the transfer of points shown by the invalidation data.

In even this computer-program, the points transferred by the first user are invalidated until validation data is supplied to the processor (1A). Moreover, even if the points are invalidated, the transfer of points itself is completed and the points of the respective users are collectively managed.

Therefore, according to the computer-program, the electronic settlement can be carried out as reducing the risk that both parties concerned in settlement take.

Moreover, this electronic money using system can easily start the procedure for transferring the points from either side of the transferor and transferee.

According to the eleventh aspect of the present invention, there is provided a computer-program causing a computer to function as memory (1B) for storing first point data representing points given to a first user onto a storage area of the memory (1B), and a processor (1A) for: generating and outputting, when transfer amount data representing points, which a second user receives from the first user, and an instruction to request generation of inquiry data are supplied from an outer section, the inquiry data in response to the corresponding instruction so as to store the corresponding inquiry data and the transfer amount data onto the storage area of the memory (1B) to be associated with each other; generating, when authentication data and the inquiry data are supplied from the outer section and an output destination of the inquiry data is authenticated as a second user based on the authentication data and success of authentication is attained, reception confirmation data representing that the corresponding second user has intention to receive the points from the first user so as to store the generated reception confirmation data onto the storage area of the memory (1B); obtaining transferor specification data that specifies the first user and the inquiry data from the first user from the outer section; updating the first point data stored by the memory (1B) in such a way that the points given to the first user specified by the transferor specification data obtained from the outer section are reduced by an amount corresponding to the points shown by the transfer amount data associated with the inquiry data obtained from the outer section when whether or not the reception confirmation data is stored and it is determined that the reception confirmation data is stored; generating second point data representing that the points shown by the transfer amount data obtained from the outer section are given to the second user and invalidation data representing that the points shown by the transfer amount data are prohibited from being transferred when it is determined that the reception confirmation data is stored, so as to store the corresponding second point data and the corresponding invalidation data onto the storage area of the memory (1B) to be associated with the inquiry data; generating validation data to cancel the prohibition of the transfer of points shown by the second point data associated with the invalidation data so as to supply the generated validation data to a supply source of the transferor specification data; and changing or erasing the invalidation data when the validation data supplied to the outer section is supplied to the processor (1A), whereby canceling the prohibition of the transfer of points shown by the invalidation data.

In even the computer-program, the points transferred by the first user are invalidated until validation data is supplied to the processor (1A). Moreover, even if the points are invalidated, the transfer of points as such is completed and the points of the respective users are collectively managed.

Therefore, according to the computer-program, the electronic settlement can be carried out as reducing the risk that both parties concerned in settlement take.

Moreover, in the computer-program, the transfer amount is specified in advance to make it possible to easily start the procedure for transferring the points from either side of the transferor and transferee.

According to the twelfth aspect of the present invention, there is provided a computer-program causing a computer to function as memory (1B) for storing first point data representing points given to a first user onto a storage area of the memory (1B), and a processor (1A) for: obtaining, from an outer section, transferor specification data that specifies the first user, transferee specification data that specifies a second user, and transfer amount data representing points to be transferred to the second user from the first user; updating the first point data stored in such a way that the points given to the first user specified by the obtained transferor specification data are reduced by an amount corresponding to the points shown by the obtained transfer amount data; generating second point data representing that the points shown by the obtained transfer amount data are given to the second user and invalidation data representing that the points shown by the transfer amount data are prohibited from being transferred so as to store the corresponding second point data and the corresponding invalidation data to be associated with each other; and changing or erasing, when authentication data for authenticating the first user and an validation instruction that requests to cancel the prohibition of the transfer of points shown by the second point data associated with the invalidation data are supplied to the processor (1A) and the first user is authenticated based on the corresponding authentication data and success of authentication is attained, the invalidation data associated with the second user, who the partner to whom the corresponding authenticated user transfers the points, whereby canceling the prohibition of the transfer of points shown by the corresponding invalidation data.

In even the computer-program, the points transferred by the first user are invalidated until validation data is supplied to the processor (1A). Moreover, even if the points are invalidated, the transfer of points as such is completed and the points of the respective users are collectively managed.

Therefore, according to the computer-program, the electronic settlement can be carried out as reducing the risk that both parties concerned in settlement take. Moreover, this eliminates the need for generating validation data and delivering validation data to make it possible to improve the safety of electronic settlement.

Each of the above programs may be recorded on a computer-readable storage medium or expressed by the computer data signal embedded in the carrier wave.

These objects and other objects and advantages of the present invention will become more apparent upon reading of the following detailed description and the accompanying drawings in which:
FIG 1 is a block diagram illustrating the configuration of electronic money using system according to the first embodiment of the present invention;
FIG 2 is a flowchart illustrating the processing of the electronic money using system of FIG. 1;
FIG 3 is a flowchart illustrating the processing of the electronic money using system according to the second embodiment of the present invention;
FIG 4 is a block diagram illustrating the configuration of electronic money using system according to the third embodiment of the present invention;
FIG. 5 is a flowchart illustrating the steps for normal processing according to the third embodiment;
FIG. 6 is a flowchart illustrating the steps for ID retransmission processing to the remitter according to the third embodiment;
FIG. 7 is a flowchart illustrating the steps for remittance cancellation processing from the remittee according to the third embodiment;
FIG 8 is a flowchart illustrating the steps for ID retransmission processing to the remitter according to the third embodiment;
FIG 9 is a flowchart illustrating the steps for remittance cancellation processing from the remitter according to the third embodiment;
FIG. 10 is a flowchart illustrating the steps for inquiry processing according to the third embodiment;
FIG 11 is a block diagram illustrating the configuration of electronic money using system according to the fourth embodiment of the present invention;
FIGS. 12 and 13 are flowcharts each illustrating the steps for normal processing according to the fourth embodiment of the present invention;
FIG. 14 is a flowchart illustrating the steps for remittance cancellation processing from the remittee according to the fourth embodiment of the present invention;
FIG. 15 is a flowchart illustrating the steps for remittance cancellation processing from the remitter according to the fourth embodiment of the present invention;
FIG. 16 is a block diagram illustrating the configuration of electronic money using system according to the fifth embodiment of the present invention; and
FIGS. 17 and 18 are flowcharts each illustrating the steps for normal processing according to the fifth embodiment of the present invention.

The following will explain an electronic settlement apparatus and an electronic settlement method taking an electronic money using system as an example with reference to the drawings accompanying herewith.

### (First embodiment)

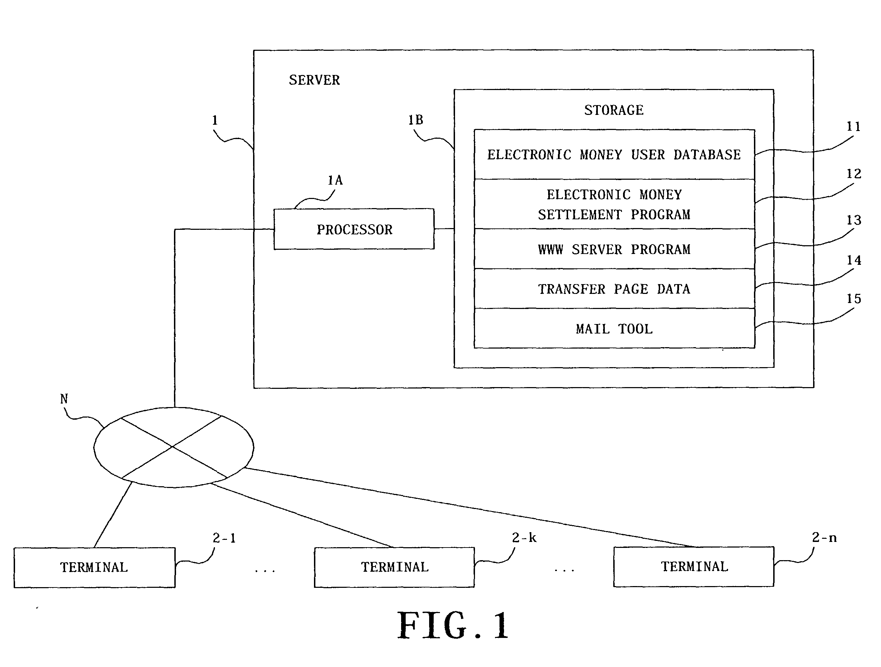

FIG 1 is a view illustrating the configuration of electronic money using system according to the first embodiment of the present invention.

As illustrated in this figure, this electronic money using system is composed of a server 1 and terminals 2-1 to 2-n (n: a total number of terminals). The terminals 2-1 to 2-n are connected to the server 1 via a network N including such as the Internet.

The server 1 includes a processor 1A and storage 1B connected to the processor 1A.

The processor 1A includes a CPU (Central Processing Unit) and DSU (Data Service Unit), and executes processing (to be described later) under control of an electronic money settlement program (to be described later) stored in the storage 1B.

The storage 1B includes a hard disk device and RAM (Random Access Memory), and stores an electronic money user database 11, electronic money settlement program 12, WWW (World Wide Web) server program 13, transfer page data 14, and mail tool 15. The storage 1B supplies these data, which the storage 1B stores, to the processor 1A in response to access from the processor 1A. The storage 1B also updates data (to be described later) stored in the electronic money user database 11 in response to access from the processor 1A.

The electronic money user database 11 stores the following data (1) to (4) as described below to be associated with one another:
(1) User ID (Identification) for identifying the user of electronic money;
(2) Balance data indicative of the balance of electronic money that the user identified by the user ID (1) holds;
(3) Invalid amount data indicative of the amount, which is temporarily prohibited (invalidated) from being used in connection with the electronic money whose balance is represented by balance data (2); and
(4) Validation ID to be supplied to the server 1 to cancel (validate) the invalidation of the amount represented by data (3).

The electronic money indicates the property value. For instance, the user that is identified by the user ID notifies the manager of server 1 of the user ID and a conversion amount through an arbitrary method to inform the manager that the user desires to convert goods into money. Resultantly, the user can receive a refund corresponding to the notified conversion amount in the balance of electronic money given to the user. In this case, balance data associated with the user ID of this user is updated to indicate a lower amount than in the past by the conversion amount through arbitrary processing.

The WWW server program 13 is a program that causes the server 1 to execute WWW server processing. When URL (Uniform Resource locator) showing a logical position of data is supplied to the server 1 that executes the WWW server program 13, the server 1 reads data, which is placed at the logical position represented by the URL among the storage areas of storage to which the storage 1B and other processor 1A are accessible. Then, the server 1 returns read data to a URL supply source.

The transfer page data 14 is data that represents an image of a transfer page, which is a web page where the server 1 causes the terminals 2-1 to 2-n to display according to processing set forth below. For example, this is described by a language such as HTML (Hyper Text Markup Language).

The transfer page is the web page that is employed to supply data, which is used when the user of electronic money transfers electronic money, to the server 1 according to processing described later. For example, the transfer page includes a remitter column, a remittee column, and a transmission button.

The remitter column is one that is used to input a user ID for a user (remitter), who sends electronic money (remitter ID), an amount of electronic money to be sent (remittance), and an e-mail address for a user (remittee), who receives electronic money, and a message to the remittee. The remittee column is one that is used to input a user ID for a remittee (remittee ID) and a validation ID. The transmission button is one that is used to instruct a replay to the server 1.

The mail tool 15 is a program that causes the server 1 to execute processing for transmitting e-mail to network N or receiving e-mail via the network N.

Any of terminals 2-1 to 2-n are composed of a computer that performs a client function. They include an input device having a keyboard and a mouse and a display device including a liquid crystal display.

Each of terminals 2-1 to 2-n executes processing for WWW browser. Namely, when inputting URL according to the operation done by the user, each of terminals 2-1 to 2n gains access to the server 1 and requests transmission of data, which is placed at the logical position represented by the URL. Then, each terminal receives data transmitted by the server 1 in response to this request, and displays an image represented by received data on a display screen of the display device of each terminal. More specifically, e.g., when receiving transfer page data 14, each of terminals 2-1 to 2-n displays the aforementioned transfer page on the display.

After that, when the user operates the input device of the terminal to input characters onto the remitter column or remittee column, the terminal that has displayed the transfer page displays the inputted characters on the remitter column or remittee column.

Moreover, when the user operates the mouse of this terminal to click the transmission button included in the transfer page, this terminal transmits data indicative of the characters inputted on the remitter column or remittee column to the server 1.

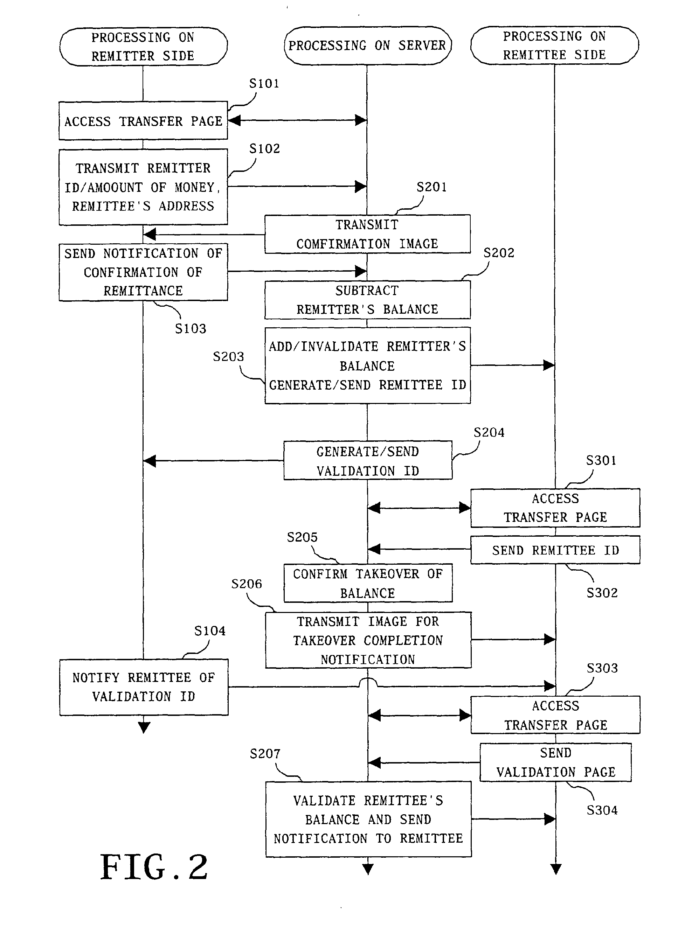

An explanation will be next given of the operation of this electronic money using system with reference to FIG 2. FIG. 2 is a flowchart illustrating the steps for the operation of this electronic money using system.

First, the processor 1A of server 1 reads the electronic money settlement program 12 from the storage 1B and executes the program. When starting the processing of electronic money settlement program 12, the processor 1A reads the WWW server program 13 from the storage 1B and executes this program. After executing this program, the processor 1A performs a function as a WWW server.

While, when the user of terminal 2-k that executes processing for WWW browser (k is an arbitrary integer of one or more and smaller than (n+1)) operates the input device of terminal 2-k to input the URL of the transfer page 14, the terminal 2-k gains access to the server 1. Then, the terminal 2-k requests the transmission of transfer page data 14 (FIG. 2, step S101). The server 1 reads transfer page data 14 from the storage 1B in response to this request, and transmits transfer page data 14 to the terminal 2-k. The terminal 2-k receives transfer page data 14 from the server 1, and displays transfer page.

After that, by operating the input device of terminal 2-k, the user inputs the remitter ID, remittance, and remittee's e-mail address, and message to the remittee, which are input onto the remitter column, to the server 1 (step S102).

When receiving each data transmitted by the terminal 2-k in step S102 and stores them temporarily, the processor 1A of server 1 generates data (confirmation image), which represents an image for urging the remitter to confirm the remittance, and transmits generated data to the terminal 2-k (step S201).

The confirmation image includes each data transmitted by the terminal 2-k in step S102 and the confirmation button for notifying the sever 1 that the remittance is confirmed. In connection with data representing the conformation image, any data may be possible if the content of the confirmation image is described in the HTML format.

The terminal 2-k receives data representing the confirmation image transmitted by the server 1 in step S201 and displays the confirmation data. Then, when the user operates the mouse of terminal 2-k to click the confirmation button included in the confirmation image, the terminal 2-k notifies the server 1 that the remitter has confirmed the remittance (step S103).

When receiving the notification that the remitter has confirmed the remittance from the terminal 2-k, the processor 1A of server 1 gains access to the electronic money user database 11 stored by the storage 1B. After that, the processor 1A updates balance data associated with the remitter ID sent by the terminal 2-k in step 102 to be reduced by the amount corresponding to the remittance transmitted by the terminal 2-k in step S102 (step S202).

Next, the processor 1A generates the aforementioned remittee ID, which is the user ID that identifies the remittee, who receives the electronic money transmitted by the remitter, and stores it to the electronic money user database 11 (step S203). Moreover, in step S203, the processor 1A generates balance data, which represents the balance equivalent to the amount of remittance transmitted by the terminal 2-k in step S102, and invalid amount data, which represents that the amount of the corresponding balance is invalidated. The processor 1A stores these two data to the electronic money user database 11 to be associated with the remittee ID newly stored. After that, the processor 1A reads the mail tool 15 from the storage 1B and executes the program. Then, the processor 1A transmits the remittee ID and the message to the remittee transmitted by the terminal 2-k in step S102 to the remittee's e-mail address transmitted by the terminal 2-k in step S102.

The processor 1A also generates validation ID to validate the amount of remittance of electronic money confirmed that the remitter would transmit. Then, the processor 1A stores generated validation ID onto the electronic money user database 11 in the form that it is associated with the remittee ID stored in the electronic money user database 11. After that, in order to notify this validation ID, the processor 1A generates data, which represents an image for displaying this validation ID, and transmits it to the terminal 2-k (step S204).

The terminal 2-k receives data transmitted by the server 1 in step S204 and displays the image represented by this data.

On the other hand, the remittee of electronic money receives e-mail, which is transmitted to the remittee by the server 1 in step S203, using any one of terminal 2-1 to 2-n or other arbitrary device connected to the network N.

Then, it is assumed that the user, who is the remittee, operates the input device of terminal 2-k that executes processing for WWW browser (j = an arbitrary integer of one or more and smaller than (n+1)) to input URL of transfer page data 14. Resultantly, the terminal 2-j performs substantially the same processing as the terminal 2-k in step S101 and receives transfer page data 14 from the server 1 to display the transfer page (step S301).

The user operates the input device of terminal 2-j to input the remittee ID on the remittee column in a state that the terminal 2-j displays the transfer page. Then, the user operates the mouse of terminal 2-j to click the transmission button of transfer page. Resultantly, the terminal 2-j transmits the remittee ID input on the remittee column to the server 1 (step S302).

When receiving the remittee ID transmitted by the terminal 2-j in step S302, the processor 1A of server 1 confirms that the remittee shows intension to take over the electronic money corresponding to the amount of remittance sent by the remitter (step S205). Then, the processor 1A generates data, which represents an image for notifying that that the takeover of electronic money is completed, and transmits it to the terminal 2-j (step S206).

The terminal 2-j receives data transmitted by the server 1 in step S206, and displays the image represented by the received data. In connection with the image represented by data generated in step S206, any image may be possible if the image shows the remitter ID or the amount of remittance taken over by the remittee.

On the other hand, the remitter transmits validation ID sent to the terminal 2-k by the server 1 in step S204 to the remittee's e-mail address for electronic money using any one of terminal 2-1 to 2-n or other arbitrary device connected to the network N in order to notify the remittee of validation ID (step S104). Timing at which validation ID is transmitted is arbitrary set. For example, the remitter may transmit validation ID after receiving goods if the electronic money is transmitted as price for goods.

After that, it is assumed that the terminal 2-h (h = an arbitrary integer of one or more and smaller than (n+1)), which executes processing for WWW browser, displays the transfer page on substantially the same processing as in step S301 according to the user's (remittee's) operation (step S303). It is also assumed that remittee ID and validation ID are inputted on the remittee column of this transfer page and that the transmission button is clicked. Resultantly, the terminal 2-h transmits the remittee ID and validation ID inputted on the remittee column to the server 1 (step S304). The processor 1A of server 1 receives the remittee ID and validation ID transmitted.

When processing up to step S206 is already completed, the processor 1A that has received the remittee ID and validation ID gains access to the electronic money user database 11 to erase invalid amount data associated with the remittee ID transmitted in step S304 (or updates invalid amount data representing that invalidated amount is 0). Resultantly, the amount represented by the invalid amount data is validated (step S207). After that, the processor 1A generates data, which represents an image for notifying that the validation of electronic money is completed, and transmits it to the terminal 2-h.

Note that the processor 1A performs no processing of step S207 when processing up to step S206 is not completed yet.

The terminal 2-h receives data transmitted by the server 1 in step S207, and displays the received data. In connection with the image represented by data generated in step S207, any image may be possible if the image represents the amount of validated electronic money or the sum total of electronic money that the remittee can use.

By carrying out the aforementioned processing in steps S101 to S104, S201 to S207 and S302 to S304, the transfer of electronic money from the remitter to the remittee is completed. When electronic money is provided to the remittee by this transfer, the remittee as such can server as a remitter to transfer electronic money to the other party afterward.

In this electronic money using system, since the remitter first remits the electronic money, the remittee can receive the electronic money without fail. Moreover, the remitted electronic money is once invalidated until the remitter notifies the remittee of the validation ID. For this reason, if the price for goods is remitted using this electronic money using system, the remitter can receive goods without fail. While, the invalidated state is one in which the transmittance itself is completed unlike the un-remitted state. Accordingly, the remittee of electronic money, who receives goods, does not take a risk of failing in collecting money. Moreover, the balance of electronic money that the remitter and remittee have is collectively managed by the server 1. This ensures the validity of transferring the balance without risking the possibility that the remitter will double-transfer the balance to a plurality of persons.

Note that the configuration of this electronic money using system is not limited to the above.

For example, the remitter column of transfer page may include a column where the remittee ID is input. In this case, when the remittee ID is input on this column, the terminal 2-k may transmit the remittee ID to the server 1 in step S102.

When the terminal 2-k transmits the remittee ID to the server 1 in step S102, the server 1 does not perform the generation of remittee ID in step S203. Instead of this, the server 1 associates newly generated balance data and invalid amount data with one of user IDs stored in the electronic money user database 11, which is substantially the same as the remittee ID sent from the terminal 2-k. After that, the server 1 may store these data to the storage 1B.

Moreover, the remitter column of transfer page does not always include the column for inputting a message to the remittee. Still moreover, the remitter may input arbitrary information (for example, the remittee's address) which is available for transmitting information including remittee ID to the remittee, on the remitter column in place of the remittee's e-mail address.

Still moreover, notification of remittee ID in step S203 and notification of validation ID in step S104 are not always performed using e-mail. Or, they are not always carried out via the network N. Accordingly, for example, the remitter and the manager of server 1 may transmit the remitter ID and validation ID to the remittee orally or by the document. Or, they may transmit the remitter ID and validation ID thereto by postal mail.

Still moreover, in the case where the remittee of electronic money knows the validation ID at the time when processing in step S301 is performed, the user may input the corresponding validation ID on the remittee column in addition to the remittee ID, and transmit it to the server 1 from the terminal 2-j. In this case, the server 1 may directly perform processing in step S207 without performing processing of steps S205 and S206.

### (Second embodiment)

An explanation will be next given of the electronic money using system according to a second embodiment.

The configuration of the electronic money using system of the second embodiment is substantially the same as that of the first embodiment illustrated in FIG. 1.

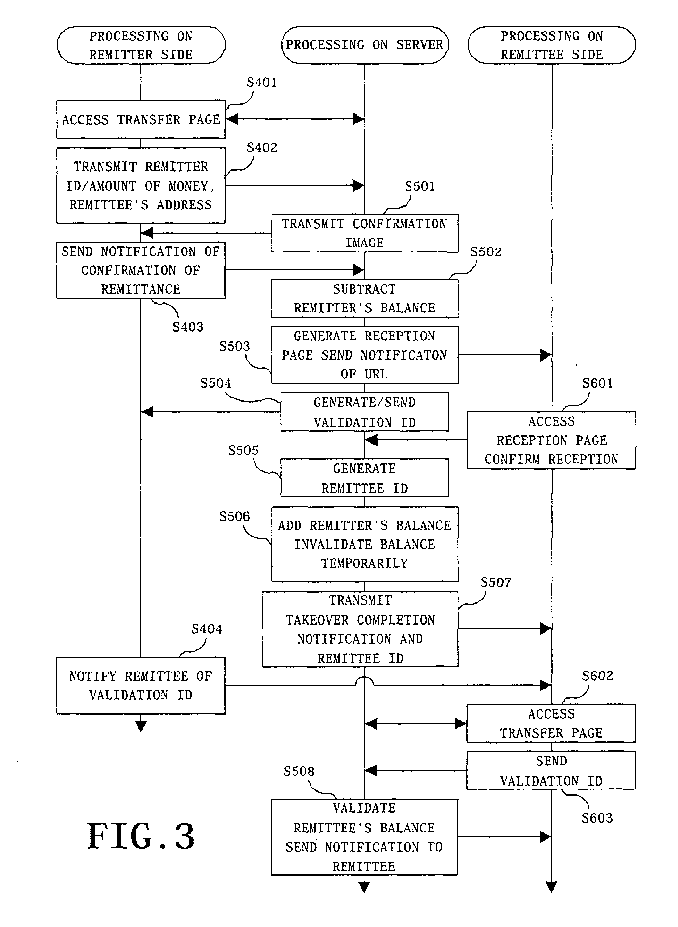

The following will explain the operation of the electronic money using system of the second embodiment with reference to FIG 3. FIG 3 is a flowchart illustrating the steps for the operation of this electronic money using system of the second embodiment.

First, the processor 1A of server 1 reads WWW server program 13 from the storage 1B and executes the program. After starting the execution, the processor 1A performs the function as a WWW server. While, it is assumed that the terminal 2-k executes processing for WWW browser.

Then, when the user of terminal 2-k operates the input device of terminal 2-k to input URL of the transfer page data 14, the terminal 2-k performs substantially the same processing as in step S101 (FIG 3, step S401). Afterward, the terminal 2-k and server 1 perform substantially the same processing as in each of steps S102, S201, S103, and S202, sequentially (steps S402, S501, S403, and S502).

When processing up to step S502 is ended, the processor 1A of server 1 generates data representing an image of reception page for accepting the reception of electronic money, and stores it to the storage 1B. After that, the processor 1A executes the mail tool 15. Then, the processor 1A transmits the message to remittee sent by the terminal 2-k in step S402 to the remittee's e-mail address sent by the terminal 2-k in step S402 under control of the mail tool 15 (step S503).

The reception page is one that is generated to be unique to each remittance sent by the remitter. Note that the reception page includes the remitter ID and the amount of remittance, and the confirmation button for notifying the sever 1 that the reception of electronic money is confirmed. Additionally, in connection with data representing the reception page, any data may be possible if the content of reception page is described in the HTML format.

Moreover, the processor 1A performs substantially the same processing as in step S204 to generate validation ID. The processor 1A stores the invalidation ID onto the storage area of storage 1B. Also, the processor 1A causes the terminal 2-k to display this validation ID (step S504). In this case, in step S504, it is assumed that the processor 1A associates the validation ID with the remitter ID sent from the terminal 2-k in step S402 or remittee's e-mail address, and that the processor 1A stores it to the storage 1B.

On the other hand, the remittee of electronic money receives e-mail, which is transmitted to the remittee by the server 1, using any one of terminal 2-1 to 2-n or other arbitrary device connected to the network N.

Then, it is assumed that the user, who is the remittee, operates the input device of terminal 2-j that executes processing for WWW browser (j = an arbitrary integer of one or more and smaller than (n+1)) to input URL of data representing the reception page. After that, the terminal 2-j transmits the inputted URL to the server 1. The processor 1A of server 1 reads data representing the reception page from the storage 1B and supplies it to the terminal 2-j. The terminal 2-j receives this data and displays the reception page (step S601).

When the user operates the mouse of terminal 2-j to click the confirmation button of reception page, the terminal 2-j notifies the server 1 that the remittee has accepted the reception of electronic money.

When receiving the notification that the remittee has accepted the reception of electronic money from the terminal 2-j, the processor 1A of server 1 generates a remittee ID that identifies the remittee who has accepted the reception, and stores it to the electronic money user database 11 (step S505).

Next, the processor 1A generates balance data, which represents the balance equivalent to the amount of remittance transmitted by the terminal 2-k in step S402, and invalid amount data, which represents that the amount of the corresponding balance is invalidated. The processor 1A stores these two data to be associated with the remittee ID newly stored in step S505, and stores them to the electronic money user database 11 (step S506). Also, the processor 1A associates the validation ID generated in step S504 and stored to the storage 1B with the remittee ID newly stored in step S505, and stores it to the electronic money user database 11.

After that, the processor 1A generates data, which represents an image for notifying that the takeover of electronic money is completed, and transmits it to the terminal 2-j (step S507).

The terminal 2-j receives data sent by the server in step S507 and displays the image represented by this data. In connection with the image represented by data generated in step S507, for example, any image may be possible if it is the same as the image represented by data generated in step S206.

On the other hand, the remitter notifies the remittee of the validation ID by the same procedure as in step S104 (step S404).

Then, it is assumed that the terminal 2-h (h = an arbitrary integer of one or more and smaller than (n+1)), which executes processing for WWW browser, displays the transfer page by substantially the same procedure as in steps S303 and S304 according to the user's (remittee's) operation and transmits remittee ID and validation ID (steps S602 and S603).

When receiving the remittee ID and validation ID sent from the terminal 2-h, the processor 1A of server 1 performs substantially the same processing as in step S207 so as to validate the amount represented by invalid amount data associated with the remittee ID sent in step S603. Then, the processor 1A causes the terminal 2-h to display the image for notifying that the validation is completed (step S508).

In the case where processing up to step S507 is not completed, the processor 1A does not perform processing of step S508 even if it receives the remittee ID and validation ID.

Accordingly, the transfer of electronic money from the remitter to the remittee can be also carried out by the aforementioned steps S401 to S404, S501 to S508 and S601 to S603.

In the second embodiment, since the takeover of electronic money is completed if the remittee gains access to the reception page using any one of terminals 2-1 to 2-n, the amount of operations performed by the remittee can be reduced. Then, even in this electronic money using system, the remittee can surely receive electronic money without taking the risk of failing in collecting the price for goods. The remitter can receive goods without fail.

Note that the configuration of this electronic money using system is not limited to the above.

For example, the remitter column of transfer page may include a column where the remittee ID is input, and the terminal 2-k may transmit the remittee ID input on this column to the server 1. In this case, the server 1 does not generate the remittee ID in step S505. Instead of this, the server 1 associates newly generated balance data and invalid amount data with one of user IDs stored in the electronic money user database 11, which is substantially the same as the remittee ID sent from the terminal 2-k. After that, the server 1 may store these data to the storage 1B.

Moreover, the remitter column of transfer page does not always include the column for inputting a message to the remittee. In place of the remittee's e-mail address, arbitrary information, which is available for transmitting URL of reception page, may be used.

Still moreover, the reception page may include a column for inputting validation ID. Then, the remittee of electronic money knows the validation ID at the time when the terminal 2-j displays the reception page, and the user inputs the validation ID on the column of the reception page. In this case, the terminal 2-j may transmit the validation ID inputted on this column to the server 1 when the confirmation button is clicked in step S601. In this case, the server 1 may omit the processing of step 507 and move to the processing of step 508 directly from step S506.

### (Third embodiment)

An explanation will be next given of the electronic money using system according to a third embodiment.

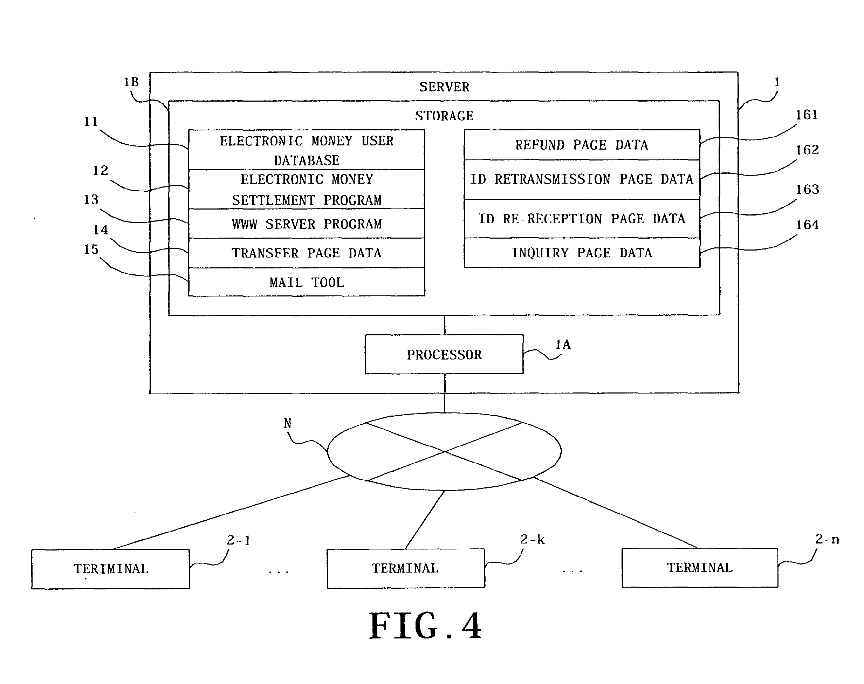

FIG 4 is a view illustrating the configuration of this electronic money using system. As illustrated in this figure, the configuration of the electronic money using system of this embodiment is substantially the same as that of the first embodiment illustrated in FIG 1, excepting the points set forth below.

In the electronic money using system of FIG 4, the storage 1B of server 1 further stores refund page data 161, ID retransmission page data 162, ID re-reception page data 163, and inquiry page data 164 in addition to data stored in the storage 1B of FIG 1.

Refund page data 161, ID retransmission page data 162, ID re-reception page data 163, and inquiry page data 164 are data representing images for refund page, ID retransmission page, ID re-reception page, and inquiry page. Namely, these pages are web pages where the server 1 causes the terminals 2-1 to 2-n to display according to the processing described later. For example, they are described by a language such as HTML.

Specifically, the refund page is a web page that is used to supply data, which is employed to refund electronic money, to the server 1. This page includes a refund column and a transmission button. The refund column includes a column for inputting an inquiry ID that specifies each remittance procedure of electronic money and a column for inputting a remittee ID for a remittee relevant to a remittance to be cancelled, and a column for inputting a validation ID or a cancellation ID that is used to cancel the remittance. The transmission button is a button for providing an instruction to send the inquiry ID, remittee ID, validation ID, or cancellation ID to the server 1.

The ID retransmission page is a web page that is used to cause the server 1 to retransmit e-mail, which should be transmitted to the electronic money remittee side (remittee's mail address). The ID retransmission page includes a column for inputting the aforementioned inquiry ID and a transmission button for providing an instruction to send the input inquiry ID to the server 1.

The ID re-reception page is a web page that is used to cause the server 1 to retransmit e-mail, which should be transmitted to the electronic money remitter side (remitter's mail address). The ID re-reception page includes a column for inputting the aforementioned inquiry ID and the remitter mail address, and a transmission button for providing an instruction to send the input inquiry ID and e-mail address to the server 1.

The inquiry page is a web page that is used to make an inquiry about the status of remittance procedure. The inquiry page includes a column for inputting the aforementioned inquiry ID, a column for inputting a remitter's or remittee's e-mail address, and a transmission button for providing an instruction to send the input inquiry ID and e-mail address to the server 1.

Moreover, in the electronic money using system of FIG 4, the remitter column of the transfer page represented by transfer page data 14 includes a column for inputting a remitter's name, remitter's e-mail address and password for authenticating a user, in addition to a column for inputting a remitter ID, amount of remittance, remittee's e-mail address, message to the remittee.

Still moreover, the electronic money user database 11 further stores the following components in addition to the aforementioned data (1) to (4) (user ID, balance data, invalid amount data, and validation ID):
(5) e-mail address of the user represented by the user ID of (1);
(6) the aforementioned password for authenticating the user represented by the user ID of (1);
(7) the inquiry ID that specifies the remittance procedure of electronic money represented by the invalid amount data of (3).
   They are stored onto the electronic money user database 11 to be associated with one another.
   Furthermore, the electronic money user database 11 further stores the following components (8) and (9) to be associated with the aforementioned inquiry data (7):
(8) the user ID of the remitter who has remitted the amount of remittance represented by the invalid amount data of (3) to the user represented by the user ID of (1); and
(9) the remitter's name represented by the user ID of (8).

### (Operation of third embodiment)

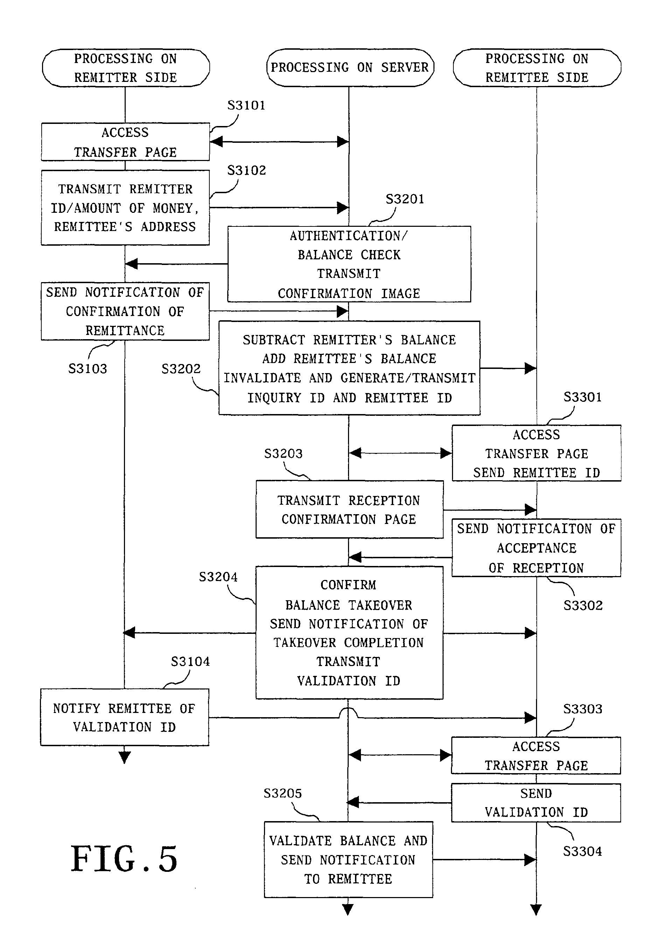

The operation of the electronic money using system of the third embodiment will be explained with reference to FIGS. 5 to 10.

FIG. 5 is a flowchart illustrating the steps for normal processing of this electronic money using system.

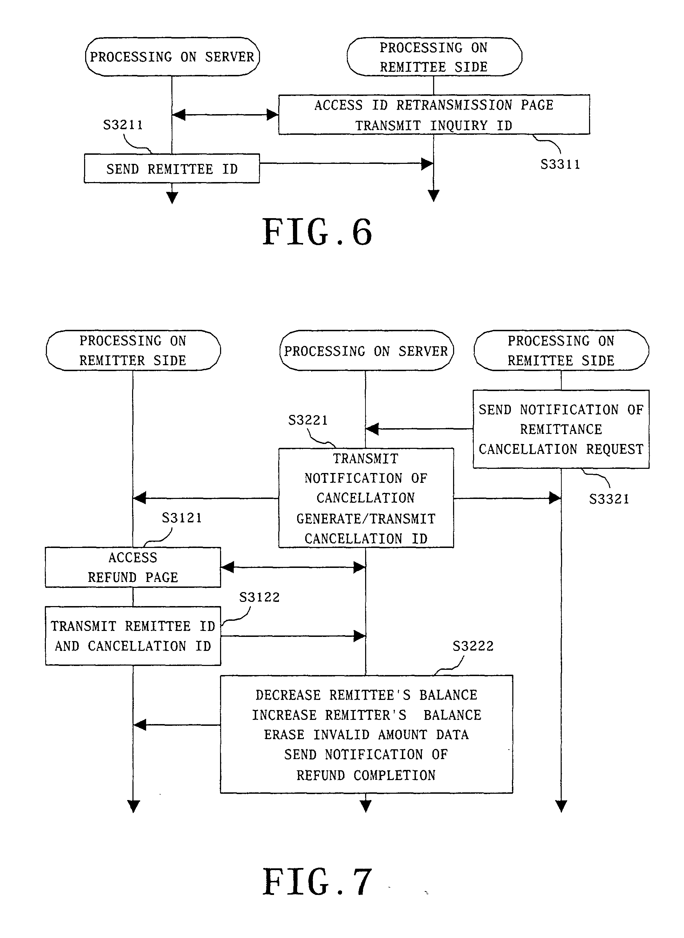

FIG 6 is a flowchart illustrating the steps for ID retransmission processing to the remittee.

FIG. 7 is a flowchart illustrating the steps for remittance cancellation processing from the remittee.

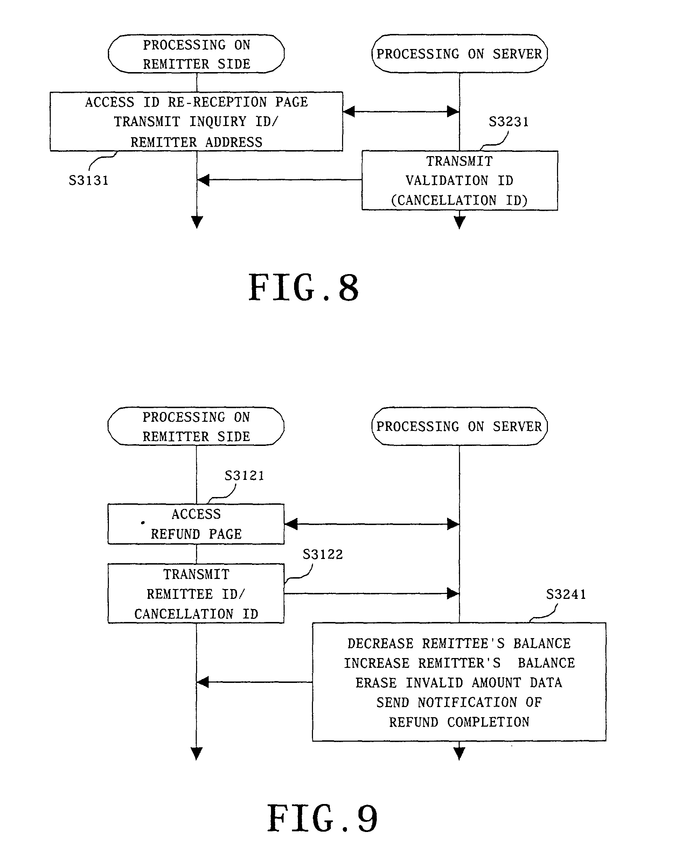

FIG 8 is a flowchart illustrating the steps for ID retransmission processing to the remitter.

FIG. 9 is a flowchart illustrating the steps for remittance cancellation processing from the remitter.

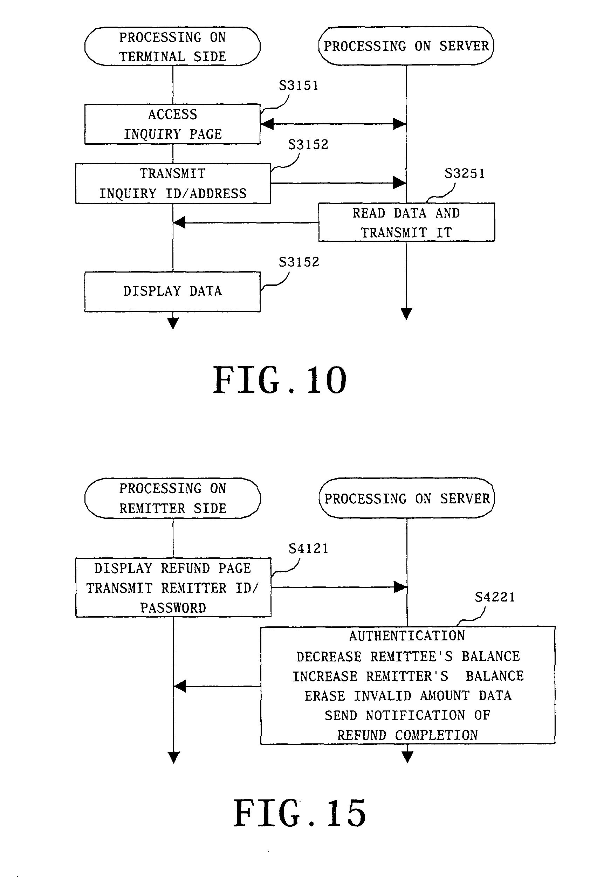

FIG. 10 is a flowchart illustrating the steps for inquiry processing.

### (Normal processing of third embodiment)

First, the processor 1A of server 1 reads WWW server program 13 from the storage 1B and executes the program. After starting the execution, the processor 1A performs the function as a WWW server.

Then, when the user of terminal 2-k that executes processing for WWW browser (k is an arbitrary integer of one or more and smaller than (n+1)) operates the terminal 2-k to input URL of transfer page data 14, the terminal 2-k performs substantially the same processing as in step S101 (FIG 5, step S3101). Afterward, the terminal 2-k and server 1 perform substantially the same processing as in each of steps S102, S201, and S103, sequentially (steps S3102, S3201, and S3103) according to the user's operation.

Note that data, which the user inputs on the remitter column of transfer page using the terminal 2-k in step S3102, further includes a remitter's name, remitter's mail address, and password in addition to data explained in the first embodiment.

Moreover, when receiving each data transmitted by the terminal 2-k in step S3102 and temporarily stores it in step S3201, the processor 1A of server 1 determines whether or not the received remitter ID and password are stored onto the electronic money user database 11 to be associated with other. If they are not stored thereonto, the processor 1A sends a predetermined message to the terminal k-2. If they are stored thereonto, the processor 1A determines whether or not the balance, which is represented by balance data associated with the received remitter ID, is greater than the received amount of remittance. If the balance is not greater than the received amount of remittance, the processor 1A transmits a predetermined message to the terminal 2-k. While, if the balance is greater than the received amount of remittance, the processor 1A generates data representing a confirmation image and transmits it to the terminal 2-k.

Next, the processor 1A of server 1 performs subtraction of remitter's balance, addition of remittee's balance, generation of invalid amount data, generation of remittee ID, and transmission thereof, similar to steps S202 and S203 of FIG. 3 (step S3202).

In this case, in step S3202, the processor 1A generates an inquiry ID in addition to the remittee ID, balance data, invalid amount data, and associates the remitter ID and remittee e-mail received from the terminal 2-k with these data, and stores them in the electronic money user database 11. Moreover, the processor 1 A transmits the inquiry ID to the remittee's e-mail address received from the terminal 2-k, in addition to the remittee ID and the message to the remittee received from the terminal 2-k. In this case, the validation ID is not generated yet in step S3202.

Moreover, in order to notify the remitter of the generated inquiry ID, the processor 1A generates data representing an image for displaying this inquiry ID, and transmits it to the terminal 2-k in step S3202. The terminal 2-k receives data transmitted by the server 1 in step S3202 and displays the inquiry ID represented by this data.

While, the remittee of electronic money receives e-mail, which is sent to the remittee by the server 1 in step S3202, using an arbitrary device connected to the network N.

Then, the user, who is the remittee, operates the terminal that executes processing for WWW browser and inputs URL of the transfer page data 14 (hereinafter, it is assumed that the corresponding terminal is terminal 2-j to make the understanding easy). In this case, the terminal 2-j performs the same processing as one carried out by the terminal 2-k in step S101, receives transfer page data 14 form the server 1 to display the transfer page (step S3301).

Then, the terminal 2-j transmits the remittee ID input on the transfer page according to the user's operation to the server 1, similar to the step S302 of FIG 2 (step S3302). Resultantly, the processor 1A of server 1 generates data representing an image (reception confirmation image) including a remitter's name, amount of remittance, confirmation button for notifying that the reception is accepted, and cancellation button for notifying that reception is rejected. Then, the processor 1A transmits generated data to the terminal 2-j (step S3203).

The terminal 2-j receives data transmitted by the server 1 in step S3203, and displays the reception confirmation image. Then, when the user operates the terminal 2-j and clicks the confirmation button, the terminal 2-j notifies the server 1 that the remittee has confirmed the remitter and the received amount and accepted the reception (step S3302).

When receiving the notification in which the reception is accepted, which is sent by the terminal 2-j in step S3302, the processor 1A of server 1 confirms that the remittee shows intension to take over the electronic money corresponding to the amount of remittance sent from the remitter. After that, the processor 1A generates data representing an image for notifying that the takeover of electronic money is completed, and transmits generated data to the terminal 2-j (step S3204). The terminal 2-j receives data sent by the server 1 in step S3204 and displays an image represented by this data.

Moreover, in step S3204, the processor 1A generates validation ID for validating the electronic money corresponding to the amount of reception that the remittee has accepted. Then, the processor 1A stores the generated validation ID onto electronic money user database 11 to be associated with the remittee ID stored onto the electronic money user database 11 in step S3202. Then, the processor 1A executes the mail tool 15 in the same way as the first embodiment in order to notify the remitter of this validation ID, whereby transmitting the validation ID to the remittee's e-mail address sent by the terminal 2-k in step S3102. The remitter receives the e-mail transmitted to the remitter by the server 1 in step S3204 using the device connected to the network N.

On the other hand, the remitter notifies the remittee of the received validation ID (step S3104). This notification may be transmitted to the remittee's e-mail address from the device connected to the network N. Timing at which the validation ID is transmitted is arbitrary set.

Then, the terminal that executes processing for WWW browser (hereinafter, it is assumed that the corresponding terminal is terminal 2-j to make the understanding easy) displays the transfer page according to the user's (remittee's) operation in the same way as step S3301 (step S3303). Then, the user inputs the remittee ID and validation ID on the remittee column of the transfer page and clicks the transmission button. Resultantly, the terminal 2-j and server 1 perform the transmission of validation ID and the validation of balance similar to steps S304 and S207 (steps S3304 and S3205). After that, the terminal 2-j receives data sent by the server 1 in step S3205 and displays an image represented by this data.

Thus, the transfer of electronic money from the remitter to remittee can be carried out by processing in the above-explained steps S3101 to S3104, S3201 to S3205, and S3301 to S3304.

### (Processing for ID retransmission to remittee of the third embodiment)

In the case where e-mail, which includes the remittee ID and inquiry ID directing to the remittee, is not arrived, the remitter, who has received a report about non-arrival of e-mail, operates the terminal that executes processing for WWW browser (hereinafter, it is assumed that the corresponding terminal is terminal 2-j to make the understanding easy). Namely, the remitter operates the terminal 2-h to carry out the same processing as in step S101 and display the ID retransmission page represented by ID retransmission data 162. Then, the remitter inputs the inquiry ID on the column of the ID retransmission page displayed by the terminal 2-j and clicks the transmission button.

Resultantly, the terminal 2-j transmits the input inquiry ID to the server 1 (FIG. 6, step S3311) and the processor 1A of server 1 receives this inquiry ID.

The processor 1A that has received the inquiry ID gains access to the electronic money user database 11 and reads the remittee ID associated with the inquiry ID and remittee's e-mail address. Then, the processor 1A retransmits the read remittee ID and the inquiry ID transmitted by the terminal 2-j in step S3311 to the e-mail address in the form of e-mail (step S3211).

### (Processing for canceling remittance from the remittee of the third embodiment)

When the remittee wishes to cancel the remittance, the remittee operates the terminal 2-j in the state that the aforementioned reception confirmation image is displayed, and clicks the cancellation button of the reception confirmation image. At this time, the terminal 2-j notifies the server 1 that the remittee requests the cancellation of remittance (FIG. 7, step S3321).

When receiving the notification of cancellation request sent by the terminal 2-j in step S3321, the processor 1A of server 1 confirms that the remittee shows intension to reject the remittance of electronic money. Then, the processor 1A generates data representing an image for notifying the cancellation of remittance of electronic money, and transmits it to the terminal 2-j (step S3221). The terminal 2-j receives data transmitted by the server 1 in step S3221 and displays the image represented by this data.

Moreover, in step S3221, the processor 1A generates cancellation ID to be used when the remitter cancels the remittance of electronic money. Then, the processor 1A stores the generated cancellation ID onto the electronic money user database 11 to be associated with the remittee ID stored onto the electronic money user database 11 in step S3202. After that, in order to notify the remitter of this cancellation ID, the processor 1A executes the mail tool 15 and transmits the cancellation ID to the remittee's e-mail address transmitted by the terminal 2-k in step S3102.

On the other hand, when receiving the cancellation ID transmitted by the server 1, the remitter operates the terminal that executes processing for WWW browser (hereinafter, it is assumed that the corresponding terminal is terminal 2-k to make the understanding easy). Namely, the remitter operates the terminal 2-k to display the refund page represented by the refund page data 161 in the same way as in step S3301 (step S3121).

After that, when the user inputs the remittee's ID and cancellation ID on the refund column of the refund page and clicks the transmission button, the terminal 2-k transmits each data input on the refund column to the server 1 (step S3122). The processor 1A of server 1 receives each data transmitted.

The processor 1A that has received the remittee's ID and cancellation ID gains access to the electronic money user database 11. Then, the processor 1A updates balance data associated with the received remittee's ID to be reduced by the amount represented by the invalid amount data associated with this balance data, and erases this invalid amount data (or updates invalid amount data representing that the invalidated amount is 0). While, the processor 1A updates balance data, which represents the user's balance shown by the remitter ID (namely, data of (8)) associated with the remittee ID, to be increased by the amount represented by the invalid amount data. Resultantly, the electronic money is refunded to the remitter (step S3222).

Moreover, in step S3222, the processor 1A generates data, which represents an image for notifying that the refund of electronic money is completed, and transmits it to the terminal 2-k. The terminal 2-k receives data transmitted by the server 1 in step S3222, and displays the image represented by this data.

### (Processing for ID retransmission to remitter of the third embodiment)

In the case where e-mail including validation ID and cancellation ID is not arrived at the remitter, the remitter operates the terminal that executes processing for WWW browser (hereinafter, it is assumed that the corresponding terminal is terminal 2-k to make the understanding easy). Namely, the remitter operates the terminal 2-k to carry out the same processing as in step S3121 and display the ID re-reception page represented by ID re-reception page data 163. Then, the remitter inputs the inquiry ID and remitter's mail address on the column of the ID re-reception page and clicks the transmission button.

Resultantly, the terminal 2-k transmits the input inquiry ID and mail address to the server 1 (FIG 8, step S3131) and the processor 1A of server 1 receives the inquiry ID and mail address.

The processor 1A that has received the inquiry ID and mail address gains access to the electronic money user database 11, and confirms that the received inquiry ID and mail address are stored thereonto to be associated with each other. Then, the processor 1A reads the validation ID associated with the inquiry ID (or cancellation ID), and retransmits it to the remitter's e-mail address transmitted by terminal 2-h in step S3131 in the form of e-mail (step S3231).

### (Processing for canceling remittance from the remitter of the third embodiment)

When the remitter wishes to cancel the remittance, the remitter operates the terminal that executes processing for WWW browser (hereinafter, it is assumed that the corresponding terminal is terminal 2-k to make the understanding easy). Namely, the remitter operates the terminal 2-k to carry out the same processing as in step S3121 and display the refund page. Then, the remitter inputs the inquiry ID (or remittee ID and cancellation ID) on the refund column of the refund page displayed by the terminal 2-h, and clicks the transmission button.

Resultantly, the terminal 2-k transmits each data input on the refund column to the server 1 (step S3122), and the processor 1A of server 1 receives each data transmitted.

The processor 1A that has received the inquiry ID gains access to the electronic money user database 11. Then, the processor 1A updates balance data associated with the received inquiry ID or remittee's ID to be reduced by the amount represented by the invalid amount data associated with this balance data, and erases this invalid amount data (or updates invalid amount data representing that the invalidated amount is 0). While, the processor 1A updates balance data, which represents the remitter's balance shown by the remitter ID (namely, data of (8)) associated with the remittee ID, to be increased by the amount represented by the invalid amount data. Resultantly, the electronic money is refunded to the remitter (step S3241).

After that, the processor 1 A generates data, which represents an image for notifying that the refund of electronic money is completed, and transmits it to the terminal 2-k in the same way as in step S3222. The terminal 2-k receives this data, and displays the image represented by this data.

Note that the processor 1A may lessen the amount of increase in balance data, which represents the balance of remitter, to be smaller than the amount represented by the invalid data. In this case, for example, the difference between the amount of increase and the amount represented by the invalid data may one corresponding to a fee collected by the manager of this electronic money using system.

Moreover, in the case where the remittee ID and cancellation ID in place of the inquiry ID are supplied to the server 1 in step S3112, the processor 1A reduces the amount of balance for the remittee and increases the amount of balance for the remitter after confirming that the remittee ID and cancellation ID are associated with each other.

### (Processing for inquiry of the third embodiment)

When the user, who is typically the remitter (or remittee), wishes to make an inquiry about business transactions, the user operates the terminal that executes processing for WWW browser (hereinafter, it is assumed that the corresponding terminal is terminal 2-k to make the understanding easy). Namely, the user operates the terminal 2-k to carry out similar processing as in step S101 and display the inquiry page represented by inquiry page data 164 (step S3151).

Then, the user inputs the inquiry ID and remitter's (or remittee's) mail address on the inquiry column of this inquiry page, and clicks the transmission button.

Resultantly, the terminal 2-k transmits each data input on the inquiry column to the server 1 (step S3152), and the processor 1A of server 1 receives each data transmitted.

The processor 1A that has received the inquiry ID and mail address gains access to the electronic money user database 11 to confirm that the inquiry ID and mail address are stored to be associated with each other. Then, the processor 1A reads data associated with the inquiry ID other than the password and generates data that represents an image for displaying read data, and transmits it to the terminal 2-k (step S3251). The terminal 2-k receives this data and displays the image represented by this data (step S3153).

Even in the electronic money using system of the third embodiment, the remittee can surely receive electronic money without taking the risk of failing in collecting the price for goods. The remitter can receive goods without fail.

Then, in this electronic money using system, the remitter or remittee can cancel the remittance and make an inquiry about the status of remittance procedure. Moreover, the notification of validation ID is sent to the remitter after receiving the acceptance from the remittee.

### (Fourth embodiment)

An explanation will be next given of the electronic money using system according to a fourth embodiment.

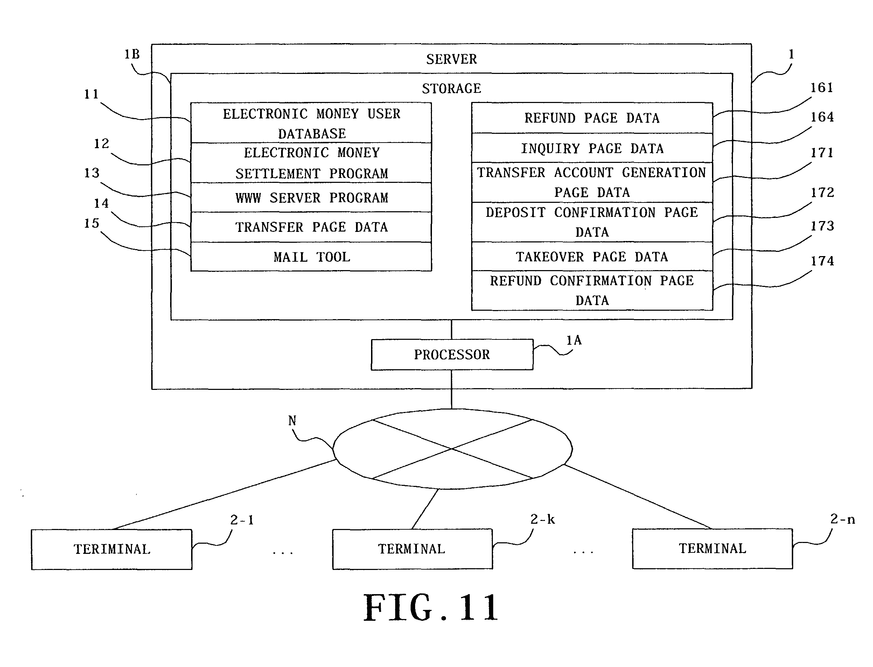

FIG. 11 is a view illustrating the configuration of this electronic money using system. As illustrated in this figure, the configuration of the electronic money using system of this embodiment is substantially the same as that of the first embodiment illustrated in FIG 1, excepting the points set forth below.

In the electronic money using system of FIG 11, the storage 1B of server 1 further stores transfer account generation page data 171, deposit confirmation page data 172, takeover page data 173, and refund confirmation page data 174 in addition to data stored in the storage 1B of the first embodiment illustrated in FIG 1. Moreover, the storage 1B stores substantially the same refund page data 161 and inquiry page data 164 as those of FIG. 4.

Transfer account generation page data 171, deposit confirmation page data 172, takeover page data 173, and refund confirmation page data 174 are data representing images of transfer account generation page, deposit confirmation page, takeover page and refund confirmation page. Namely, these pages are web pages where the server 1 causes the terminals 2-1 to 2-n to display according to the processing described later. For example, they are described by a language such as HTML.

The transfer account generation page is a web page that is used to supply data, which is employed to newly generate an account (generation of user ID), to the server 1. The transfer account generation page includes a column for inputting the name of the nominee of an account, password for authenticating the nominee, and nominee's e-mail address, and a transmission button for providing an instruction to send the input inquiry ID to the server 1.

The deposit confirmation page is a web page that is used when the remittee confirms the reception of electronic money. The deposit confirmation page includes a column for inputting remittee ID and remittee's password, and a transmission button for providing an instruction to send the input remittee ID and remittee's password to the server 1.

The takeover page is a web page that is used to confirm that the electronic money deposited to the remittee is validated. The takeover page includes a column for inputting remittee ID and remittee's password, and a transmission button for providing an instruction to send the input remittee ID and remittee's password to the server 1.

The refund confirmation page is a web page that is used when the remitter confirms that the electronic money is refunded by the cancellation of remittance from the remittee. The refund confirmation page includes a column for inputting remitter ID and remitter's password, and a transmission button for providing an instruction to send the input remitter ID and remitter's password to the server 1.

Moreover, in the electronic money using system of FIG. 11, the remitter column of the transfer page represented by transfer page data 14 includes a column for inputting a password and a validation button for instructing validation in addition to the column of the first embodiment.

Still moreover, the electronic money user database 11 has substantially the same data structure as that of the third embodiment.

### (Operation of the fourth embodiment)

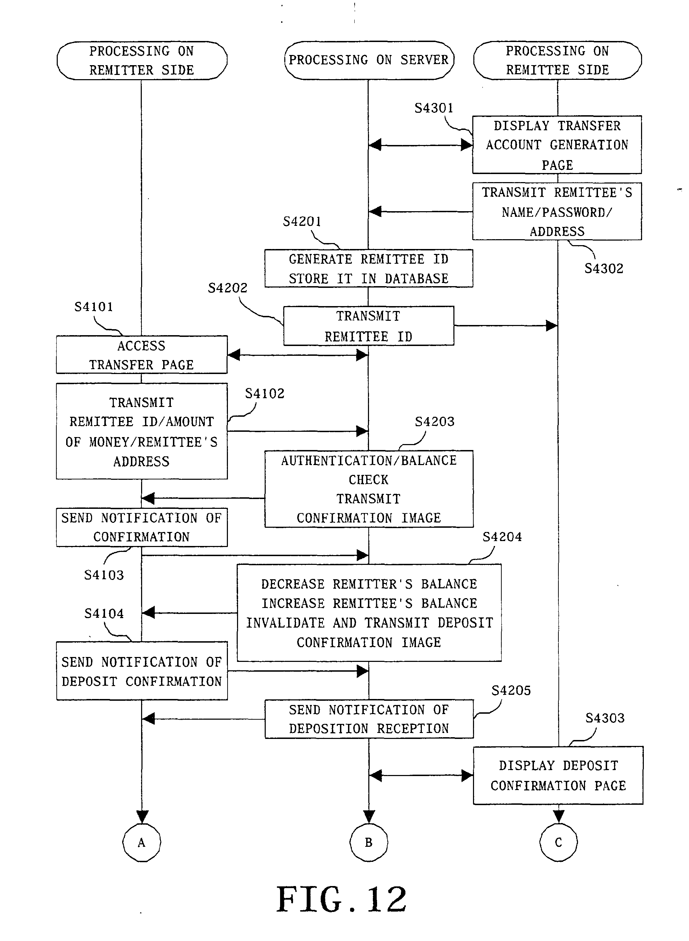

The operation of the electronic money using system of the fourth embodiment will be explained with reference to FIGS. 12 to 14.

FIG. 12 is a flowchart illustrating the steps for normal processing.

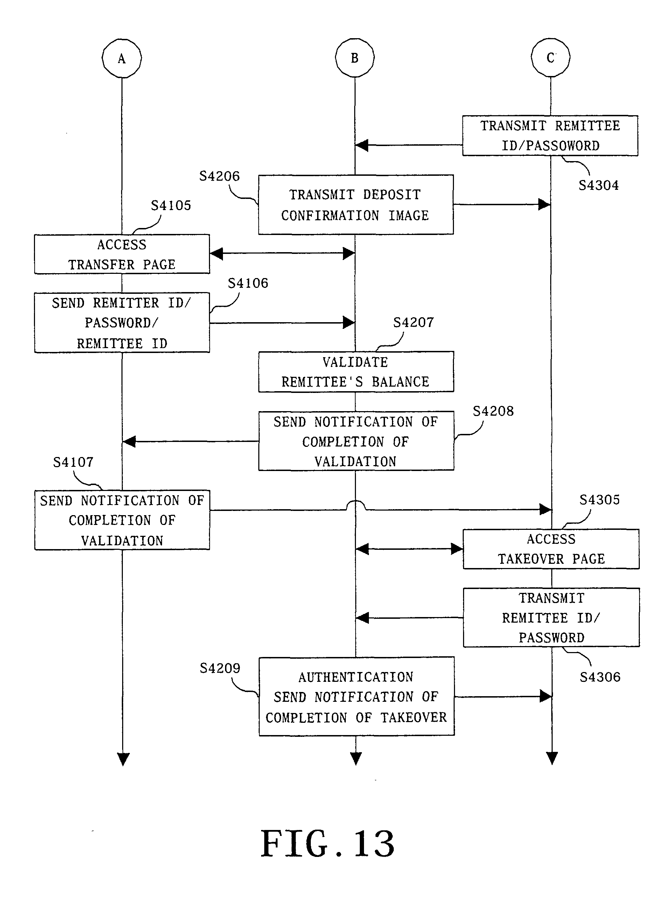

FIG 13 is a flowchart illustrating the steps for remittance cancellation processing from the remittee.

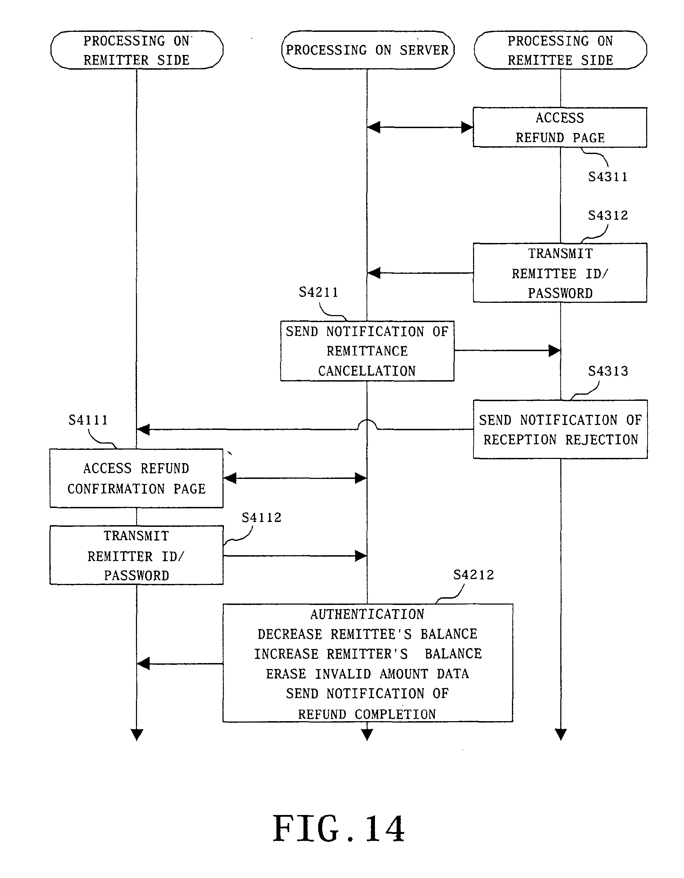

FIG 14 is a flowchart illustrating the steps for remittance cancellation processing from the remitter.

### (Normal processing of the fourth embodiment)

First, the processor 1A of server 1 reads WWW server program 13 from the storage 1B and executes the program. After starting the execution, the processor 1A performs a function as WWW server. While, it is assumed that the terminal 2-j (j = an arbitrary integer of one or more and smaller than (n+1)) executes processing for WWW browser.

Then, the user of terminal 2-j operates the terminal 2-j to input URL of transfer account generation page data 171, whereby causing the terminal 2-1 to display the transfer account generation page represented by transfer account generation page data 171 in the same way as in step S101 (FIG. 12, step S4301).

After this, the user operates the terminal 2-j to input the remittee's name of electronic money, serving as a nominee of account, password and remittee's e-mail address on the column of deposit account generation page and click the transmission button of deposit account generation page. After that, the terminal 2-j transmits these data input on the deposit account generation column to the server 1 (step S4302).

When receiving each data transmitted by the terminal 2-j in step S4302, the processor 1A of server 1 generates user ID (namely, remittee ID) that identifies the remittee in which the name is included in received data. Then, the processor 1A stores the generated remittee ID, received remittee's name, password and remittee's e-mail address onto the electronic money user database 11 to be associated with one another (step S4201). After that, the processor 1A executes the mail tool 15 and transmits the remittee ID to the remittee's e-mail address received from the terminal 2-j (step S4202).

The remittee receives e-mail transmitted to the remittee by the server 1 in step S4202 using other arbitrary device connected to the network N, and notifies the remitter of the remittee ID included in received e-mail. The method for providing notification to the remitter is arbitrarily used. For example, this e-mail may be transmitted to the remitter's e-mail address.

On the other hand, the user of terminal 2-k (k = an arbitrary integer of one or more and smaller than (n+1)) operates the terminal 2-k to input URL of transfer page data 14, so that the terminal 2-k displays the transfer page in the same way as in the first to third embodiment (step S4101). Resultantly, the terminal 2-k and server 1 carry out substantially the same processing as in steps S3102, 3201 and 3103 sequentially according to the user's operation (steps S4102, S4203, and 4103).

Additionally, it is assumed that data input on the remitter column in step S4102 includes remittee ID, amount of remittance, remitter ID, password, and message to remittee.

Next, the processor 1A of server 1 generates balance data, which represents the balance equivalent to the amount of remittance transmitted by the terminal 2-k in step S4102, and invalid amount data, which represents that the entire amount of balance is invalidated. Then, the processor 1A stores these two data onto the electronic money user database 11 to be associated with the remittee ID received in step S4102. Moreover, the processor 1A performs the subtraction of remitter's balance (step S4204). In step S4204, when the processor 1A passes the balance check of step S4203, the processor 1A generates data, which represents a transfer confirmation image for displaying the remittee ID, amount of remittance and confirmation button, and transmits it to the terminal 2-k.

The terminal 2-k receives data transmitted by the server 1 in step S4204, and displays the transfer confirmation image. Then, when the user of terminal 2-k clicks the confirmation button on the transfer confirmation image, the terminal 2-k notifies the server 1 that the remitter has confirmed the remitting destination and the amount of remittance (step S4104).

When receiving the notification in which the remitter has confirmed the remitting destination and the amount of remittance from the terminal 2-k, the processor 1A of server 1 generates data representing an image for notifying that the remittance is accepted and transmits it to the terminal 2-k (step S4205). The terminal 2-k received this data and displays the image represented by this data.

On the other hand, the remitter notifies the remittee that the remittance has been sent (step S4104). This may be performed by, e.g., transmitting notification to the remittee's e-mail address using the device connected to the network N.

Then, the user, who is typically the remittee, operates the terminal that executes processing for WWW browser to input URL of deposit confirmation page data 172 (hereinafter, it is assumed that the corresponding terminal is terminal 2-j to make the understanding easy). The terminal 2-j displays the deposit confirmation page represented by deposit confirmation page data 172 in similar way as in step S104 (step S4303).

The user operates the terminal 2-j to input the remittee ID and password on the column of deposit confirmation page in a state that the terminal 2-j displays the deposit confirmation page and click the transmission button. Resultantly, the terminal 2-j transmits the remittee ID and password input on the column to the server 1 (FIG. 13, step S4304).

When receiving the remittee ID and password transmitted by the terminal 2-j in step S4304, the processor 1A of server 1 determines whether or not the remittee ID and password are stored onto the electronic money user database 11 to be associated with each other. If they are stored thereonto, the processor 1A judges that success of authentication has been attained, and generates data that represents an image for confirming deposit, and transmits it to the terminal 2-j (step S4206). Regarding this image, any image may be possible if the image represents the remitter ID or the amount of remittance. The terminal 2-j receives this data from the server 1 and displays the image represented by this data. Additionally, in the case where success of authentication is not attained, the processor 1A transmits, e.g., a predetermined error message to the terminal 2-j.

On the other hand, for example, there is a case in which the electronic money is remitted as a price for goods. In this case, the remitter operates the terminal that executes that executes processing for WWW browser (hereinafter, it is assumed that the corresponding terminal is terminal 2-k to make the understanding easy). Namely, the remitter operates the terminal 2-k to display the transfer page in the same way as in step S101 in order to validate the transmitted electronic money at timing after goods are received (step S4105).

After that, it is assumed that the user operates the terminal 2-k to input the remitter ID, password, remittee ID on the remitter column and click the validation button. Resultantly, the terminal 2-k transmits each data, which is input on the remitter column, and notification in which the electronic money is validated to the server 1 (step S4106).

When receiving each data transmitted by the terminal 2-k in step S4106, the processor 1A of server 1 gains access to the electronic money user database 11 if processing of step S4206 is already completed. Then, the processor 1A determines whether or not the received remitter ID and password are stored onto the electronic money user database 11 to be associated with each other. If they are stored thereonto, the processor 1A judges that success of authentication has been attained, and erases invalid amount data associated with the remittee ID transmitted in step S4106 (or updates invalid amount data indicating that invalidated amount is 0). Resultantly, the amount represented by the invalid amount data is validated (step S4207). After that, the processor 1A generates data, which represents an image for notifying that the validation of electronic money is completed, and transmits it to the terminal 2-k (step S4208). The terminal 2-k receives this data and displays the image represented by this data.

Additionally, in the case where processing of step S4206 is not completed or success of authentication is not attained in step S4205, the processor 1A transmits, e.g., a predetermined error message to the terminal 2-j without performing processing of steps S4207 to S4208.

The remitter, who has received the notification of the validation of electronic money, notifies the remittee that the remitted electronic money has been validated (step S4107). This may be carried out by, e.g., transmitting notification to the remittee's e-mail address.

Then, the user, who is typically the remittee, operates the terminal that executes processing for WWW browser (hereinafter, it is assumed that the corresponding terminal is terminal 2-j to make the understanding easy). Namely, the user operates the terminal 2-j to perform similar processing as the terminal 2-k of step S101 and display the overtake page represented by the overtake page data 173 (step S4305).

The user operates the terminal 2-j to input the remittee ID and password on the column of overtake page in a state that the terminal 2-j displays the overtake page and click the transmission button. Resultantly, the terminal 2-j transmits the remittee ID and password input on the column to the server 1 (step S4306).

When receiving the remittee ID and password transmitted by the terminal 2-j in step S4306, the processor 1A of server 1 determines whether or not the remittee ID and password are stored onto the electronic money user database 11 to be associated with each other. When they are stored thereonto, the processor 1A judges that success of authentication has been attained, and generates data that represents an image for notifying that the electronic money corresponding to the amount of remittance sent from the remitter is taken over by the remittee. Then, the processor 1A transmits generated data to the terminal 2-j (step S4209). The terminal 2-j receives this data and displays the image represented by this data. Additionally, in the case where success of authentication is not attained in step S4209, the processor 1A transmits, e.g., a predetermined error message to the terminal 2-j.

The transfer of electronic money to the remittee from the remitter can be carried out even by the aforementioned processing in steps S4101 to S4107, S4201 to S4209, and S4301 to S4306.

### (Processing for inquiry of the fourth embodiment)

The steps for processing inquiry of the electronic money using system of this embodiment are substantially the same as those of the third embodiment.

### (Processing for canceling remittance form the remittee of the fourth embodiment)

When the remittee wishes to cancel the remittance, the remittee operates the terminal 2-j that executes processing for WWW browser to perform substantially the same processing as that of the terminal 2-k of step S3121 and display the refund page (FIG 14, step S4311). Then, the remittee inputs the remittee ID and password on the refund column of refund page and clicks the transmission button.

Resultantly, the terminal 2-j transmits each data input on the refund column to the server 1 (step S4312), and the processor 1A of server 1 receives each data transmitted.

When receiving data transmitted by the terminal 2-j in step S4312, the processor 1A confirms that the remittee has rejected the reception of electronic money, and stores the received remittee ID temporarily. Moreover, the processor 1A generates data representing an image for notifying the cancellation of the remittance of electronic money, and transmits it to the terminal 2-j (step S4211). The terminal 2-j receives this data and displays the image represented by this data.

While, the remittee notifies the remitter that the reception of electronic money has been rejected by performing transmission to the remittee's e-mail address for electronic money using any one of terminals 2-1 to 2-n or other arbitrary device connected to the network N (step S4313). Notification timing may be arbitrarily set.

The remitter, who has been notified that the reception of electronic money has been rejected, operates the terminal that executes processing for WWW browser (hereinafter, it is assumed that the corresponding terminal is terminal 2-k to make the understanding easy). Namely, the remitter operates the terminal 2-k to display the refund confirmation page represented by refund confirmation page data 174 in similar way as in the step S3121 (step S4111). After that, the remitter inputs the remitter ID and password on the column of the refund confirmation page and clicks the transmission button. Resultantly, the terminal 2-k transmits each data input on the column to the server 1 (step S4112), and the processor 1A of server 1 receives these data.

The processor 1 A that has received the remitter ID and password gains access to the electronic money user database 11. Then, the processor 1A of server 1 determines whether or not the remitter ID and password are stored onto the electronic money user database 11 to be associated with other and whether or not the remitter ID is stored thereonto as data of (8) to be associated with the remittee Id temporarily stored in step S4211.

If they are stored thereonto, the processor 1A judges that success of authentication has been attained and updates balance data, which represents the balance of remittee shown by the remittee ID associated with the received remitter ID as data of (8), to be reduced by the amount represented by the invalid amount data associated with this balance data. Then, the processor 1A erases this invalid amount data (or updates invalid amount data representing that the invalidated amount is 0). While, the processor 1A updates balance data associated with the remitter ID to be increased by the amount represented by the invalid amount data. Resultantly, the electronic money is refunded to the remitter (step S4212).

Moreover, in step S4212, the processor 1A generates data that represents an image for notifying that the refund of electronic money has been completed, and transmits it to the terminal 2-k. The terminal 2-k receives data transmitted by the server 1 in step S4212 and displays the image represented by this data. Additionally, in the case where success of authentication is not attained in step S4212, the processor 1A transmits, e.g., a predetermined error message to the terminal 2-k.

### (Processing for canceling remittance from the remitter of the fourth embodiment)

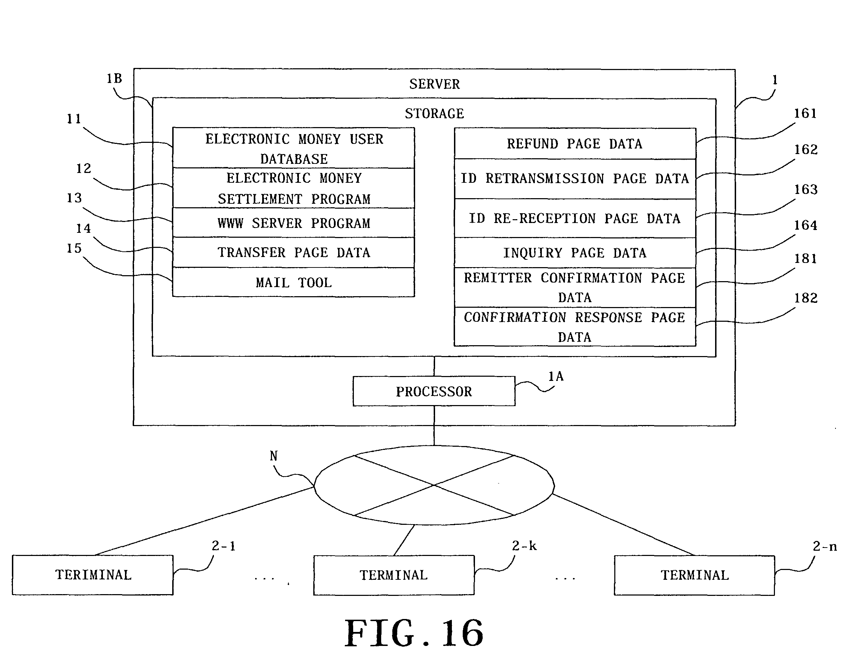

When the remitter wishes to cancel the remittance, the remitter operates the terminal that executes processing for WWW browser (hereinafter, it is assumed that the corresponding terminal is terminal 2-k to make the understanding easy). Namely, the remitter operates the terminal 2-k to carry out the same processing as in step S3121 and display the refund page. Then, the remitter inputs the remitter ID and password on the refund column of the refund page displayed by the terminal 2-k, and clicks the transmission button. Resultantly, the terminal 2-k transmits the remitter ID and password to the server 1 (FIG. 15, step S4121), and the processor 1A of server 1 receives the remitter ID and password.

When receiving the remitter ID and password transmitted in step S4121, the server 1 gains access to the electronic money user database 11 to determine whether or not the remitter ID and password are stored onto the electronic money user database 11 to be associated with other. If they are stored thereonto, the server 1 judges that success of authentication has been attained and performs an increase in the amount of balance for the remitter, a reduction in balance for the remittee, and an erase in invalid amount data. Resultantly, the electronic money is refunded to the remitter (step S4221). Additionally, in the case where success of authentication is not attained in steps S4221, the processor 1A transmits, e.g., a predetermined error message to the terminal 2-k.

In the electronic money using system of the fourth embodiment, the remittee can surely receive electronic money without taking the risk of failing in collecting the price for goods. The remitter can receive goods without fail.

### (Fifth embodiment)

An explanation will be next given of the electronic money using system according to a fifth embodiment.

FIG 16 is a view illustrating the configuration of this electronic money using system. As illustrated in this figure, the configuration of the electronic money using system of this embodiment is substantially the same as that of the first embodiment illustrated in FIG. 1, excepting the points set forth below.

In the electronic money using system of FIG. 16, the storage 1B of server 1 further stores remitter confirmation page data 181 and confirmation response page data 182 in addition to data stored in the storage 1B of the third embodiment illustrated in FIG 4. Moreover, the storage 1B stores substantially the same refund page data 161 and inquiry page data 164 as those of FIG. 4.

Remitter confirmation page data 181 and confirmation response page data 182 are data representing images of remitter confirmation page and confirmation response page. Namely, these pages are web pages where the server 1 causes the terminals 2-1 to 2-n to display according to the processing described later. For example, they are described by a language such as HTML.

The remitter confirmation page is a web page that is used when the remitter of electronic money or the remittee causes this electronic money using system to generate inquiry ID. The remitter confirmation page includes a column for inputting a remitter's mail address, remittee's e-mail address and remitter's (remittee's) password, and a transmission button for providing an instruction to send each input data to the server 1.

The confirmation response page is a web page that is used to notify that the generated inquiry ID has been confirmed by a person who causes the system to generate the inquiry ID. The confirmation response page includes a column for inputting inquiry ID and remitter's (remittee's) password, and a transmission button for providing an instruction to send each input data to the server 1.

Moreover, in the electronic money using system of FIG. 16, the remitter column of the transfer page represented by transfer page data 14 includes a column for inputting a password in addition to the column of the first embodiment.

Still moreover, the electronic money user database 11 has substantially the same data structure as that of the third embodiment.

### (Operation of the fifth embodiment)

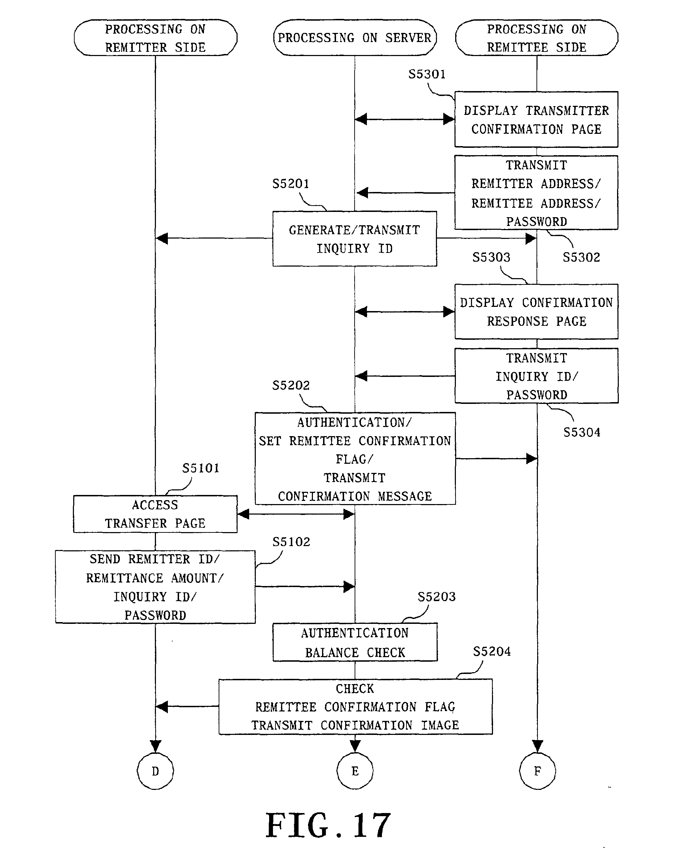

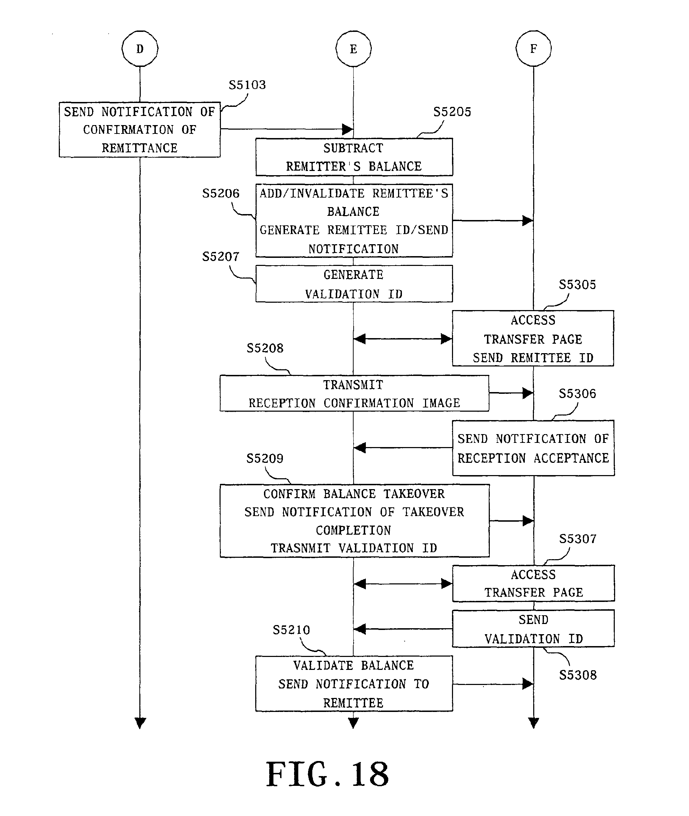

The operation of the electronic money using system of the fifth embodiment will be explained with reference to FIGS. 17 and 18.

FIGS. 17 and 18 are flowcharts each illustrating the steps for normal processing.

### (Normal processing of the fifth embodiment)

First, the processor 1A of server 1 reads WWW server program 13 from the storage 1B and executes the program. After starting the execution, the processor 1A performs a function as WWW server. While, it is assumed that the terminal 2-j (j = an arbitrary integer of one or more and smaller than (n+1)) executes processing for WWW browser.

Then, the user of terminal 2-j operates the terminal 2-j to perform similar processing as in the step S101, whereby causing the terminal 2-j to display the remitter confirmation page represented by the remitter confirmation page data 181 (FIG 17, step S5301).

Sequentially, the user operates the terminal 2-j to input the remitter's mail address, remittee's e-mail address, remitter's (or remittee's) password on the column of the remitter confirmation page and click the transmission button of the remitter confirmation page. Resultantly, the terminal 2-j transmits these data input on the remitter column to the server 1 (step S5302).

When the processor 1A of server 1 receives each data transmitted by the terminal 2-j in step S5302 and stores these data into storage 1B temporarily, the processor 1A generates inquiry ID, which is unique to the remittance to the remittee from the remitter represented by the received data. Then, the processor 1A temporarily stores the inquiry ID onto the storage 1B to be associated with data temporarily stored. After that, the processor 1A executes the mail tool 15 to transmit this inquiry ID to both remitter's e-mail address and remittee's e-mail address received from the terminal 2-j (step S5201).

The remitter and remittee receive e-mail, which the server 1 has transmitted to each of the remitter and remittee, using the device connected to the network N.

Moreover, in step S5201, the processor 1A generates data that represents an image for displaying the generated inquiry ID, and transmits it to the terminal 2-j. The terminal 2-j receives this data, and displays the inquiry ID represented by this data.

Next, the user of terminal 2-j operates the terminal 2-j to perform similar processing as in the step S101, whereby causing the terminal 2-j to display the confirmation response page represented by confirmation response page 182 (step S5303).

Then, the user inputs inquiry ID and password on the column of the confirmation response page and clicks the transmission button. Resultantly, the terminal 2-j transmits the input inquiry ID and password to the server 1 (step S5304).

When receiving the inquiry ID and password transmitted by the terminal 2-j in step S5304, the processor 1A of server 1 determines whether or not the password associated with the received inquiry ID conforms to the received password. If it does not conform to the received password, the processor 1A transmits a predetermined error message to the terminal 2-j.

While, if it conforms to the received password, the processor 1A sets a remittee confirmation flag, which represents that the confirmation has been completed (more specifically, the remittee confirmation flag having a value, which represents that the confirmation has been completed, is stored onto the storage 1B to be associated with the inquiry ID stored in step S5201). Then, the processor 1A generates data, which represents a confirmation message in which the reception of inquiry ID has been confirmed, and transmits it to the terminal 2-j (step S5202). The terminal 2-k receives this data, and displays this confirmation message.

Next, the user, who is typically the remitter, operates the terminal that executes processing for WWW browser (hereinafter, it is assumed that the corresponding terminal is terminal 2-k to make the understanding easy). Namely, the user operates the terminal 2-k to cause the terminal 2-j and server 1 to carry out substantially the same processing as in the steps S101 and S102, sequentially (steps S5101 and S5102).

Additionally, in step S5102, it is assumed that inquiry ID, remitter ID and remitter's password are included in data input on the remitter column (and data included in the confirmation image) in place of the remittee's mail address.

Next, in step S5203, the processor 1A of server 1 receives each data transmitted by the terminal 2-k in step S5102 and temporarily stores them. Then, the processor 1A determines whether or not the received remitter ID and password are stored onto the electronic money user database 11 to be associated with each other and whether or not the received inquiry ID is stored onto the storage 1B. If they are not stored thereonto, the processor 1A transmits a predetermined error message to the terminal 2-k. If they are stored thereonto, the processor 1A determines whether or not the balance, which is represented by balance data associated with the received remitter ID, is more than the received amount of remittance. If the balance is not more than the received amount of remittance, the processor 1 A transmits a predetermined error message to the terminal 2-k.

While, if the balance is more than the received amount of remittance, the processor 1A determines whether the remittee confirmation flag is set in connection with the remittance represented by the received inquiry ID. If it is not set, the processor 1A transmits a predetermined error message to the terminal 2-k. While, if it is set, the processor 1A performs the same processing as in step S201 to generate data representing the confirmation image and transmit it to the terminal 2-k (step S5204).

The terminal 2-k receives data transmitted by the server 1 in step S5204 and displays the confirmation image. After that, the user operates the terminal 2-k to click the confirmation button of the confirmation image. Resultantly, the terminal 2-k and server 1 perform substantially the same processing as in steps S103, S202 to S204 (steps S5103, S5205 to S5207). In this case, the server 1 does not perform processing for transmitting data that represents validation ID to the terminal 2-k in step S5207.

On the other hand, the remittee of electronic money receives e-mail including the remittee ID, which is transmitted to the remittee by the server 1, by use of the device connected to the network N.

Then, the user, who is typically the remittee, operates the terminal that executes processing for WWW browser (hereinafter, it is assumed that the corresponding terminal is terminal 2-j to make the understanding easy). Whereby, the terminal 2-j and server 1 perform substantially the same processing as in steps S3301 to S3304, and S3203 to S3205 (steps S5305 to S5308, S5208 to S5210). In this case, it is assumed that the processor 1A of server 1, in step S5208, uses the validation ID generated in step S5206 in place of newly generating validation ID.

The transfer of electronic money from the remitter to the remittee is carried out even by the aforementioned processing in steps S5101 to S5104, S5201 to S5210, and S5301 to S5308.

### (Other processing of the fifth embodiment)

The electronic money using system of FIG 15 performs the processing for ID retransmission to the remittee, the processing for canceling the remittance from the remittee, the processing for ID retransmission to the remitter, processing for canceling the remittance from the remitter, and the processing for inquiry in substantially the same steps as those of the third embodiment (processing shown in FIGS. 6, 7, 8, and 10).

In the electronic money using system of the fifth embodiment, the remittee can surely receive electronic money without taking the risk of failing in collecting the price for goods. The remitter can receive goods without fail. Then, this electronic money using system can start the remittance procedure from either side of the remitter and remittee.

### (Sixth embodiment)

An explanation will be next given of the electronic money using system according to a sixth embodiment.

The configuration of this electronic money using system of the sixth embodiment is substantially the same as that of the fifth embodiment shown in FIG 16.

Moreover, the steps for processing carried out by the electronic money using system of the sixth embodiment are substantially the same as those of the fifth embodiment in connection with normal processing, and other processing.

However, the operation steps for the electronic money using system of the sixth embodiment are different from the fifth embodiment in the following points (a) to (d).
(a) The remitter confirmation column of remitter confirmation page includes a column on which a predetermined amount of remittance is input, and the terminal 2-j also transmits the predetermined amount of remittance input on this column to the server 1 in step S5302. Then, the server 1 uses this predetermined amount of remittance in place of the amount of remittance transmitted in step S5102.
(b) The server 1 transmits the inquiry ID to only the remittee in step S5201, and sets the remittee confirmation flag and transmits the inquiry ID to the remitter in step S5202.
(c) The remitter column of transfer page represented by transfer page data 14 does not include the column on which the remitter ID is input.
(d) The confirmation image represented by data generated by the server 1 in step S5204 includes the column on which the remitter ID is input. In step S5302, the terminal 2-j transmits the remitter ID input on this column to the server 1. Then, in the processing after step S5302, the remitter ID transmitted in step 5302 is used in place of the remitter ID transmitted in step S5102 in the fifth embodiment.

In the electronic money using system of the sixth embodiment, the remittee can surely receive electronic money without taking the risk of failing in collecting the price for goods. The remitter can receive goods without fail. Then, this electronic money using system can start the remittance procedure from either side of the remitter and remittee.

Though the embodiments of the present invention have been thus explained, the electronic settlement apparatus of the present invention can be implemented using not only the dedicated system but also the general computer system.

For example, programs for executing the operations of the server 1 and terminals 2-1 to 2-n are installed onto a plurality of computers, each having a DSU and terminal adapter, connected to each other via communication line from, from the storage medium (CD-ROM, magnetic tape, etc.) having the above programs stored. This makes it possible to structure the electronic money using system that executes the above processing.

Moreover, for example, these programs may be placed on a bulletin board system (BBS) of the communication line and delivered via the communication line. Furthermore, a carrier wave is modulated by the signal representing these programs, and the obtained modulated wave is transmitted. Then, the device that receives the modulated wave may demodulate the modulated wave to restore these programs.

Then, the program is started up and executed similar to the other application program under control OS, making it possible to execute the above processing.

Additionally, in the case where OS shares the part of processing or OS partially forms one of the configuration components of the present invention, the program excepting the part may be stored onto the storage medium. In this case, according to the present invention, each function that is executed by the computer and the program for executing the steps are stored onto the storage medium.

As explained above, according to the present invention, there can be implemented the electronic settlement apparatus and electronic settlement method that are capable of performing electronic settlement as reducing the risk that both parties concerned in settlement take.

Various embodiments and changes may be made thereunto without departing from the broad spirit and scope of the invention. The above-described embodiments are intended to illustrate the present invention, not to limit the scope of the present invention. The scope of the present invention is shown by the attached claims rather than the embodiments. Various modifications made within the meaning of an equivalent of the claims of the invention and within the claims are to be regarded to be in the scope of the present invention.

This application is based on Japanese Patent Application No. 2000-317324 filed on October 18, 2000 and including specification, claims, drawings and summary. The disclosure of the above Japanese Patent Application is incorporated herein by reference in its entirety.

## Claims

1. An electronic settlement apparatus **characterized by** comprising memory (1B) for storing first point data representing points given to a first user onto a storage area of said memory (1B) and a processor (1A), wherein said processor (1A) obtains, from an outer section, transferor specification data that specifies said first user, transferee specification data that specifies a second user, and transfer amount data representing points to be transferred to said second user from said first user; updates said first point data stored in said memory (1B) in such a way that the points given to said first user specified by said obtained transferor specification data are reduced by an amount corresponding to the points shown by said obtained transfer amount data; generates second point data representing that the points shown by said obtained transfer amount data are given to said second user and invalidation data representing that the points shown by the corresponding second point data are prohibited from being transferred so as to store the corresponding second point data and the corresponding invalidation data onto the storage area of said memory (1B) to be associated with each other; generates validation data to cancel the prohibition of the transfer of points shown by the second point data associated with said invalidation data so as to supply said generated validation data to a supply source of said transferor specification data; and changes or erases said invalidation data when said validation data supplied to the outer section is supplied to the processor (1A), whereby canceling the prohibition of the transfer of points shown by said invalidation data.

2. The electronic settlement apparatus according to claim 1, **characterized in that** said processor (1A) generates and outputs inquiry data and stores the corresponding inquiry data onto the storage area of said memory (1B) to be associated with said second point data, said invalidation data, said first user, and said second user; and supplies at lease some of said second point data associated with the corresponding inquiry data, said invalidation data, said data representing said first user and said data representing said second data to the supply source of the corresponding inquiry data when said inquiry data is supplied to said processor (1A).

3. The electronic settlement apparatus according to claim 2, **characterized in that** when said inquiry data and cancellation data representing the cancellation of the transfer of points shown by said second point data are supplied to said processor (1A), said processor (1A) changes or erases said invalidation data associated with said inquiry data in response to said cancellation data, and updates said first point data in such a way that the points given to the first user specified by said transferor specification data are increased within the range of the amount corresponding to the points shown by said second point data, whereby canceling the transfer of the corresponding points.

4. The electronic settlement apparatus according to claim 1, **characterized in that** said transferee specification data represents e-mail address for said second user, and said processor (1A) transmits e-mail including transfer notification data representing that said second user receives the transfer of points with respect to the e-mail address shown by said transferee specification data.

5. The electronic settlement apparatus according to claim 1, **characterized in that** said memory (1B) stores said second point data to be associated with second identification data that identifies said second user, said transfer notification data includes said second identification data, said processor (1A) maintains the prohibition of the transfer of points shown by the second point data associated with said second identification data regardless of whether or not said validation data is supplied to said processor (1A) until said second identification data is supplied to said processor (1A) from the outer section.

6. The electronic settlement apparatus according to claim 5, **characterized in that** when said second identification data and transferee cancellation data representing the cancellation of reception of points shown by said second point data are supplied to said processor (1A), said processor (1A) changes or erases said invalidation data in response to the corresponding transferee cancellation data and updates said first point data in such a way that the points given to the first user specified by said transferor specification data are increased within the range of the amount corresponding to the points shown by said second point data, whereby canceling the transfer of the corresponding points.

7. The electronic settlement apparatus according to claim 4, **characterized in that** said processor (1A) generates data representing a web page for confirming that said second user transfers the points, and outputs data representing the corresponding web page to browse the corresponding web page when URL (Uniform Resource Locator) that specifies the corresponding web page is supplied from the outer section, said transfer notification data includes URL that specifies said web page, and said processor (1A) maintains the prohibition of the transfer of points shown by the second point data associated with said second identification data regardless of whether or not said validation data is supplied to said processor (1A) until the data representing said web page is output to the outer section,

8. An electronic settlement apparatus **characterized by** comprising memory (1B) for storing first point data representing points given to a first user onto a storage area of said memory (1B) and a processor (1A), wherein when an instruction to request generation of inquiry data is supplied from an outer section, said processor (1A) generates said inquiry data in response to the corresponding instruction, outputs said generated inquiry data, and stores the corresponding inquiry data onto a storage area of said memory (1B); when authentication data and said inquiry data are supplied from the outer section, said processor (1A) authenticates an output destination of said inquiry data as a second user based on the corresponding authentication data, and when success of authentication is attained, said processor (1A) generates reception confirmation data representing that the corresponding second user has intension to receive the points from said first user so as to store said reception confirmation data onto the storage area of said memory (1B); said processor (1A) obtains, from an outer section, transferor specification data that specifies said first user, said inquiry data, and transfer amount data representing points to be transferred to said second user from said first user; said processor (1A) determines whether or not said reception confirmation data is stored; when it is determined that said reception confirmation data is stored, said processor (1A) updates said first point data stored in said memory (1B) in such a way that the points given to said first user specified by said transferor specification data obtained from the outer section are reduced by an amount corresponding to the points shown by said obtained transfer amount data; when it is determined that said reception confirmation data is stored, said processor (1A) generates second point data representing that the points shown by said transfer amount data obtained from the outer section are given to said second user and invalidation data representing that the points shown by the transfer amount data are prohibited from being transferred so as to store the corresponding second point data and the corresponding invalidation data onto the storage area of said memory (1B) to be associated with said inquiry data; said processor (1A) generates validation data to cancel the prohibition of the transfer of points shown by the second point data associated with said invalidation data so as to supply said generated validation data to a supply source of said transferor specification data; and when said validation data supplied to the outer section is supplied to said processor (1A), said processor (1A) changes or erases said invalidation data, whereby canceling the prohibition of the transfer of points shown by said invalidation data.

9. The electronic settlement apparatus according to claim 8, **characterized in that** when said inquiry data and cancellation data representing the cancellation of the transfer of points shown by said second point data are supplied to said processor (1A), said processor (1A) changes or erases said invalidation data associated with said inquiry data in response to said cancellation data, and updates said first point data in such a way that the points given to the first user specified by said transferor specification data are increased within the range of the amount corresponding to the points shown by said second point data, whereby canceling the transfer of the corresponding points.

10. The electronic settlement apparatus according to claim 8, **characterized in that** said transferee specification data represents e-mail address for said second user, and said processor (1A) transmits e-mail including transfer notification data representing that said second user receives the transfer of points with respect to the e-mail address shown by said transferee specification data.

11. The electronic settlement apparatus according to claim 10, **characterized in that** said memory (1B) stores said second point data to be associated with second identification data that identifies said second user, said transfer notification data includes said second identification data, said processor (1A) maintains the prohibition of the transfer of points shown by the second point data associated with said second identification data regardless of whether or not said validation data is supplied to said processor (1A) until said second identification data is supplied to said processor (1A) from the outer section.

12. The electronic settlement apparatus according to claim 11, **characterized in that** when said second identification data and transferee cancellation data representing the cancellation of reception of points shown by said second point data are supplied to said processor (1A), said processor (1A) changes or erases said invalidation data in response to the corresponding transferee cancellation data and updates said first point data in such a way that the points given to the first user specified by said transferor specification data are increased within the range of the amount corresponding to the points shown by said second point data, whereby canceling the transfer of the corresponding points.

13. The electronic settlement apparatus according to claim 10, **characterized in that** said processor (1A) generates data representing a web page for confirming that said second user transfers the points, and outputs data representing the corresponding web page to browse the corresponding web page when URL (Uniform Resource Locator) that specifies the corresponding web page is supplied from the outer section, said transfer notification data includes URL that specifies said web page, and said processor (1A) maintains the prohibition of the transfer of points shown by the second point data associated with said second identification data regardless of whether or not said validation data is supplied to said processor (1A) until the data representing said web page is output to the outer section.

14. An electronic settlement apparatus **characterized by** comprising memory (1B) for storing first point data representing points given to a first user onto a storage area of said memory (1B) and a processor (1A), wherein when transfer amount data representing points, which a second user receives from said first user, and an instruction to request generation of inquiry data are supplied from an outer section, said processor (1A) generates said inquiry data in response to the corresponding instruction, outputs said generated inquiry data, and stores the corresponding inquiry data and said transfer amount data onto a storage area of said memory (1B) to be associated with each other; when authentication data and said inquiry data are supplied from the outer section, said processor (1A) authenticates an output destination of said inquiry data as a second user based on the corresponding authentication data, and when success of authentication is attained, said processor (1A) generates reception confirmation data representing that the corresponding second user has intension to receive the points from said first user so as to store said reception confirmation data onto the storage area of said memory (1B); said processor (1A) obtains transferor specification data that specifies said first user and said inquiry data from an outer section; said processor (1A) determines whether or not said reception confirmation data is stored; when it is determined that said reception confirmation data is stored, said processor (1A) updates said first point data stored in said memory (1B) in such a way that the points given to said first user specified by said transferor specification data obtained from the outer section are reduced by an amount corresponding to the points shown by said transfer amount data associated with said inquiry data obtained from the outer section; when it is determined that said reception confirmation data is stored, said processor (1A) generates second point data representing that the points shown by said transfer amount data obtained from the outer section are given to said second user and invalidation data representing that the points shown by the transfer amount data are prohibited from being transferred so as to store the corresponding second point data and the corresponding invalidation data onto the storage area of said memory (1B) to be associated with said inquiry data; said processor (1A) generates validation data to cancel the prohibition of the transfer of points shown by the second point data associated with said invalidation data so as to supply said generated validation data to a supply source of said transferor specification data; and when said validation data supplied to the outer section is supplied to said processor (1A), said processor (1A) changes or erases said invalidation data, whereby canceling the prohibition of the transfer of points shown by said invalidation data.

15. The electronic settlement apparatus according to claim 14, **characterized in that** when said inquiry data and cancellation data representing the cancellation of the transfer of points shown by said second point data are supplied to said processor (1A), said processor (1A) changes or erases said invalidation data associated with said inquiry data in response to said cancellation data, and updates said first point data in such a way that the points given to the first user specified by said transferor specification data are increased within the range of the amount corresponding to the points shown by said second point data, whereby canceling the transfer of the corresponding points.

16. The electronic settlement apparatus according to claim 14, **characterized in that** said transferee specification data represents e-mail address for said second user, and said processor (1A) transmits e-mail including transfer notification data representing that said second user receives the transfer of points with respect to the e-mail address shown by said transferee specification data.

17. The electronic settlement apparatus according to claim 16, **characterized in that** said memory (1B) stores said second point data to be associated with second identification data that identifies said second user, said transfer notification data includes said second identification data, said processor (1A) maintains the prohibition of the transfer of points shown by the second point data associated with said second identification data regardless of whether or not said validation data is supplied to said processor (1A) until said second identification data is supplied to said processor (1A) from the outer section.

18. The electronic settlement apparatus according to claim 17, **characterized in that** when said second identification data and transferee cancellation data representing the cancellation of reception of points shown by said second point data are supplied to said processor (1A), said processor (1A) changes or erases said invalidation data in response to the corresponding transferee cancellation data and updates said first point data in such a way that the points given to the first user specified by said transferor specification data are increased within the range of the amount corresponding to the points shown by said second point data, whereby canceling the transfer of the corresponding points.

19. The electronic settlement apparatus according to claim 16, **characterized in that** said processor (1A) generates data representing a web page for confirming that said second user transfers the points, and outputs data representing the corresponding web page to browse the corresponding web page when URL (Uniform Resource Locator) that specifies the corresponding web page is supplied from the outer section, said transfer notification data includes URL that specifies said web page, and said processor (1A) maintains the prohibition of the transfer of points shown by the second point data associated with said second identification data regardless of whether or not said validation data is supplied to said processor (1A) until the data representing said web page is output to the outer section.

20. An electronic settlement apparatus **characterized by** comprising memory (1B) for storing first point data representing points given to a first user onto a storage area of said memory (1B) and a processor (1A), wherein said processor (1A) obtains, from an outer section, transferor specification data that specifies said first user, transferee specification data that specifies a second user, and transfer amount data representing points to be transferred to said second user from said first user; updates said first point data stored in said memory (1B) in such a way that the points given to said first user specified by said obtained transferor specification data are reduced by an amount corresponding to the points shown by said obtained transfer amount data; generates second point data representing that the points shown by said obtained transfer amount data are given to said second user and invalidation data representing that the points shown by the transfer amount data are prohibited from being transferred so as to store the corresponding second point data and the corresponding invalidation data onto the storage area of said memory (1B) to be associated with each other; when authentication data for authenticating said first user and a validation instruction that requests to cancel the prohibition of transfer of points shown by second point data associated with said invalidation data are supplied to said processor (1A), said processor (1A) authenticates said first user based on the corresponding authentication data, and when success of authentication is attained, said processor (1A) changes or erases said invalidation data associated with said second user, who is the partner to whom the corresponding first user transfers points, whereby canceling the prohibition of the transfer of points shown by said invalidation data.

21. The electronic settlement apparatus according to claim 16, wherein when an inquiry instruction and said authentication data are supplied to said processor (1A), said processor (1A) authenticates the user based on the corresponding authentication data, and when success of authentication is attained, said processor (1A) supplies at least some of said second point data associated with the corresponding authenticated user, said invalidation data and data representing the partner, which is subjected to the transfer of points to/from the corresponding user, to the supply source of the corresponding inquiry data.

22. The electronic settlement apparatus according to claim 20, wherein when an said authentication data and cancellation data that represents the cancellation of the transfer of points shown by said second point data are supplied to said processor (1A), said processor (1A) authenticates the first user based on the corresponding authentication data, and when success of authentication is attained, said processor (1A) changes or erases said invalidation data associated with said second user, who is the partner to whom the corresponding first user transfers points, and updates said first point data stored in said memory (1B) in such a way that the points given to the first user are increased within the range of the amount corresponding to the points shown by said second point data, whereby canceling the transfer of the corresponding points.

23. The electronic settlement apparatus according to claim 21, wherein when an said authentication data and cancellation data that represents the cancellation of the transfer of points shown by said second point data are supplied to said processor (1A), said processor (1A) authenticates the second user based on the corresponding authentication data, and when success of authentication is attained, said processor (1A) changes or erases said invalidation data associated with the corresponding authenticated second user, and updates said first point data stored in said memory (1B) in such a way that the points given to the first user, who is the partner to whom the corresponding first user transfers points, are increased within the range of the amount corresponding to the points shown by said second point data, whereby canceling the transfer of the corresponding points.

24. An electronic settlement method **characterized by** comprising the steps of:
storing first point data representing points given to a first user;
obtaining transferor specification data that specifies said first user, transferee specification data that specifies a second user, and transfer amount data representing points to be transferred to said second user from said first user;
updating said first point data stored in said memory (1B) in such a way that the points given to said first user specified by said obtained transferor specification data are reduced by an amount corresponding to the points shown by said obtained transfer amount data;
generating second point data representing that the points shown by said obtained transfer amount data are given to said second user and invalidation data representing that the points shown by the transfer amount data are prohibited from being transferred;
generating validation data to cancel the prohibition of the transfer of points shown by the second point data associated with said invalidation data so as to supply said generated validation data to a supply source of said transferor specification data; and
changing or erasing said invalidation data when said validation data supplied to a outer section is supplied from the outer section, whereby canceling the prohibition of the transfer of points shown by said invalidation data.

25. An electronic settlement method **characterized by** comprising the steps of:
storing first point data representing points given to a first user;
obtaining, from an outer section, transferor specification data that specifies said first user, transferee specification data that specifies a second user, and transfer amount data representing points to be transferred to said second user from said first user;
updating said first point data stored in such a way that the points given to said first user specified by said obtained transferor specification data are reduced by an amount corresponding to the points shown by said obtained transfer amount data;
generating second point data representing that the points shown by said obtained transfer amount data are given to said second user and invalidation data representing that the points shown by the transfer amount data are prohibited from being transferred so as to store the corresponding second point data and the corresponding invalidation data to be associated with each other; and
changing or erasing, when authentication data for authenticating said first user and an validation instruction that requests to cancel the prohibition of the transfer of points shown by the second point data associated with said invalidation data are supplied and said first user is authenticated based on the corresponding authentication data and success of authentication is attained, said invalidation data associated with said second user, who the partner to whom the corresponding authenticated user transfers the points, whereby canceling the prohibition of the transfer of points shown by the corresponding invalidation data.

26. An electronic settlement method **characterized by** comprising the steps of:
storing first point data representing points given to a first user;
generating and outputting, when an instruction to request generation of inquiry data is supplied from an outer section, said inquiry data in response to the corresponding instruction so as to store the corresponding inquiry data;
generating and storing, when authentication data and said inquiry data are supplied from the outer section and an output destination of said inquiry data is authenticated as a second user based on said authentication data and success of authentication is attained, reception confirmation data representing that the corresponding second user has intention to receive the points from said first user;
obtaining transferor specification data that specifies said first user, said inquiry data, and transfer amount data representing points to be transferred to said second user from said first user from the outer section;
updating said first point data stored in such a way that the points given to said first user specified by said transferor specification data obtained from the outer section are reduced by an amount corresponding to the points shown by said obtained transfer amount data when whether or not said reception confirmation data is stored and it is determined that said reception confirmation data is stored;
generating second point data representing that the points shown by said transfer amount data obtained from the outer section are given to said second user and invalidation data representing that the points shown by the transfer amount data are prohibited from being transferred when it is determined that said reception confirmation data is stored, so as to store the corresponding second point data and the corresponding invalidation data to be associated with said inquiry data;
generating validation data to cancel the prohibition of the transfer of points shown by the second point data associated with said invalidation data so as to supply said generated validation data to a supply source of said transferor specification data; and
changing or erasing said invalidation data when said validation data supplied to the outer section is supplied, whereby canceling the prohibition of the transfer of points shown by said invalidation data.

27. An electronic settlement method **characterized by** comprising the steps of:
storing first point data representing points given to a first user;
generating and outputting, when transfer amount data representing points, which a second user receives from said first user, and an instruction to request generation of inquiry data are supplied from an outer section, said inquiry data in response to the corresponding instruction so as to store the corresponding inquiry data and said transfer amount data to be associated with each other;
generating and storing, when authentication data and said inquiry data are supplied from the outer section and an output destination of said inquiry data is authenticated as a second user based on said authentication data and success of authentication is attained, reception confirmation data representing that the corresponding second user has intention to receive the points from said first user;
obtaining transferor specification data that specifies said first user and said inquiry data from the outer section;
updating said first point data stored in such a way that the points given to said first user specified by said transferor specification data obtained from the outer section are reduced by an amount corresponding to the points shown by said obtained transfer amount data when whether or not said reception confirmation data is stored and it is determined that said reception confirmation data is stored;
generating second point data representing that the points shown by said transfer amount data obtained from the outer section are given to said second user and invalidation data representing that the points shown by the corresponding second point data are prohibited from being transferred when it is determined that said reception confirmation data is stored, so as to store the corresponding second point data and the corresponding invalidation data to be associated with said inquiry data;
generating validation data to cancel the prohibition of the transfer of points shown by the second point data associated with said invalidation data so as to supply said generated validation data to a supply source of said transferor specification data; and
changing or erasing said invalidation data when said validation data supplied to the outer section is supplied, whereby canceling the prohibition of the transfer of points shown by said invalidation data.

28. A computer-program causing a computer to function as memory (1B) for storing first point data representing points given to a first user onto a storage area of said memory (1B), and a processor (1A) for:
obtaining, from an outer section, transferor specification data that specifies said first user, transferee specification data that specifies a second user, and transfer amount data representing points to be transferred to said second user from said first user;
updating said first point data stored in such a way that the points given to said first user specified by said obtained transferor specification data are reduced by an amount corresponding to the points shown by said obtained transfer amount data;
generating second point data representing that the points shown by said obtained transfer amount data are given to said second user and invalidation data representing that the points shown by the transfer amount data are prohibited from being transferred so as to store the corresponding second point data and the corresponding invalidation data to be associated with each other;
generating validation data for canceling the prohibition of the transfer of points shown by said invalidation data; and
changing or erasing said invalidation data when said validation data supplied to the outer section is supplied to the processor (1A), whereby canceling the prohibition of the transfer of points shown by said invalidation data.

29. A computer-program causing a computer to function as memory (1B) for storing first point data representing points given to a first user onto a storage area of said memory (1B), and a processor (1A) for:
generating and outputting, when an instruction to request generation of inquiry data is supplied from an outer section, said inquiry data in response to the corresponding instruction so as to store the corresponding inquiry data onto the storage area of said memory (1B);
generating, when authentication data and said inquiry data are supplied from the outer section and an output destination of said inquiry data is authenticated as a second user based on said authentication data and success of authentication is attained, reception confirmation data representing that the corresponding second user has intention to receive the points from said first user so as to store said generated reception confirmation data onto the storage area of said memory (1B);
obtaining transferor specification data that specifies said first user, said inquiry data, and transfer amount data representing points to be transferred to said second user from said first user from the outer section;
updating said first point data stored by said memory (1B) in such a way that the points given to said first user specified by said transferor specification data obtained from the outer section are reduced by an amount corresponding to the points shown by said obtained transfer amount data when whether or not said reception confirmation data is stored and it is determined that said reception confirmation data is stored;
generating second point data representing that the points shown by said transfer amount data obtained from the outer section are given to said second user and invalidation data representing that the points shown by the transfer amount data are prohibited from being transferred when it is determined that said reception confirmation data is stored, so as to store the corresponding second point data and the corresponding invalidation data onto the storage area of said memory (1B) to be associated with said inquiry data;
generating validation data to cancel the prohibition of the transfer of points shown by the second point data associated with said invalidation data so as to supply said generated validation data to a supply source of said transferor specification data; and
changing or erasing said invalidation data when said validation data supplied to the outer section is supplied to the processor (1A), whereby canceling the prohibition of the transfer of points shown by said invalidation data.

30. A computer-program causing a computer to function as memory (1B) for storing first point data representing points given to a first user onto a storage area of said memory (1B), and a processor (1A) for:
generating and outputting, when transfer amount data representing points, which a second user receives from said first user, and an instruction to request generation of inquiry data are supplied from an outer section, said inquiry data in response to the corresponding instruction so as to store the corresponding inquiry data and said transfer amount data onto the storage area of said memory (1B) to be associated with each other;
generating, when authentication data and said inquiry data are supplied from the outer section and an output destination of said inquiry data is authenticated as a second user based on said authentication data and success of authentication is attained, reception confirmation data representing that the corresponding second user has intention to receive the points from said first user so as to store said generated reception confirmation data onto the storage area of said memory (1B);
obtaining transferor specification data that specifies said first user and said inquiry data from said first user from the outer section;
updating said first point data stored by said memory (1B) in such a way that the points given to said first user specified by said transferor specification data obtained from the outer section are reduced by an amount corresponding to the points shown by said transfer amount data associated with said inquiry data obtained from the outer section when whether or not said reception confirmation data is stored and it is determined that said reception confirmation data is stored;
generating second point data representing that the points shown by said transfer amount data obtained from the outer section are given to said second user and invalidation data representing that the points shown by the transfer amount data are prohibited from being transferred when it is determined that said reception confirmation data is stored, so as to store the corresponding second point data and the corresponding invalidation data onto the storage area of said memory (1B) to be associated with said inquiry data;
generating validation data to cancel the prohibition of the transfer of points shown by the second point data associated with said invalidation data so as to supply said generated validation data to a supply source of said transferor specification data; and
changing or erasing said invalidation data when said validation data supplied to the outer section is supplied to the processor (1A), whereby canceling the prohibition of the transfer of points shown by said invalidation data.

31. A computer-program causing a computer to function as memory (1B) for storing first point data representing points given to a first user onto a storage area of said memory (1B), and a processor (1A) for:
obtaining, from an outer section, transferor specification data that specifies said first user, transferee specification data that specifies a second user, and transfer amount data representing points to be transferred to said second user from said first user;
updating said first point data stored in such a way that the points given to said first user specified by said obtained transferor specification data are reduced by an amount corresponding to the points shown by said obtained transfer amount data;
generating second point data representing that the points shown by said obtained transfer amount data are given to said second user and invalidation data representing that the points shown by the transfer amount data are prohibited from being transferred so as to store the corresponding second point data and the corresponding invalidation data to be associated with each other; and
changing or erasing, when authentication data for authenticating said first user and an validation instruction that requests to cancel the prohibition of the transfer of points shown by the second point data associated with said invalidation data are supplied to the processor (1A) and said first user is authenticated based on the corresponding authentication data and success of authentication is attained, said invalidation data associated with said second user, who the partner to whom the corresponding authenticated user transfers the points, whereby canceling the prohibition of the transfer of points shown by the corresponding invalidation data.
